# FASCICULE DE BREVET EUROPEEN

(11) **EP 0 821 870 B1**
(45) Date de publication et mention de la délivrance du brevet: **13.03.2002**
(21) Numéro de dépôt: 97440059.0
(22) Date de dépôt: 07.07.1997
(51) Int. Cl.: A01D 43/10

(54) **Faucheuse-conditionneuse**
Mähmaschine mit Aufbereiter
Mower conditioner

(30) Priorité: 22.07.1996 FR 9609351
(43) Date de publication de la demande: 04.02.1998
(73) Titulaire: KUHN S.A., 67700 Saverne (FR)
(72) Inventeur: Walch, Martin, 67490 Dettwiller (FR); Wattron, Bernard, 67700 Haegen (FR)

(56) Documents cités:
- EP-A- 0 163 587
- EP-A- 0 277 343
- EP-A- 0 357 312
- EP-A- 0 429 383
- EP-A- 0 593 377
- EP-A- 0 678 237
- FR-A- 2 376 615
- US-A- 4 142 349
- US-A- 4 519 188

## Description

La présente invention concerne une machine agricole de récolte de végétaux comportant :
- un châssis mobile,
- un timon destiné à lier ladite machine agricole de récolte de végétaux à un véhicule tracteur et lui-même lié au châssis au moyen d'une articulation de sorte à pouvoir pivoter autour d'un axe de pivotement dirigé vers le haut,
- un mécanisme de récolte lié au châssis mobile et comportant :
   * un mécanisme de coupe comprenant des organes de coupe destinés à couper des végétaux, et
   * un dispositif de conditionnement comprenant deux unités de conditionnement s'étendant sensiblement dans le prolongement l'une de l'autre et équipées chacune de deux organes conditionneurs contrarotatifs susceptibles de s'éloigner l'un de l'autre et entre lesquels sont destinés à passer les végétaux coupés par les organes de coupe en vue de leur traitement,
- des organes de transmission destinés, entre autres, à assurer l'animation des unités de conditionnement et comprenant un boîtier de transmission s'étendant entre les deux unités de conditionnement et comportant pour chacune d'elles :
   * un premier arbre de sortie lié, au moyen d'un accouplement, à l'extrémité intérieure du premier organe conditionneur proche du boîtier de transmission, et
   * un deuxième arbre de sortie accouplé, au moyen d'un dispositif de transmission, au deuxième organe conditionneur.

Une telle machine agricole de récolte de végétaux est connue par les brevets américains US-4,142,349 et US-3,772,865.

Cette machine agricole de récolte de végétaux connue comporte un mécanisme de récolte comprenant une structure porteuse à laquelle sont liés un mécanisme de coupe et un dispositif de conditionnement.

Le mécanisme de coupe comporte deux paires d'organes de coupe suspendues à la structure porteuse et placées l'une à côté de l'autre. Les organes de coupe sont entraînés en rotation au moyen d'organes de transmission de manière que le sens de rotation de deux organes de coupe formant une paire, convergent, de sorte à former un andain de végétaux coupés.

Le dispositif de conditionnement comporte deux unités de conditionnement s'étendant chacune derrière une paire d'organes de coupe et sensiblement dans le prolongement l'une de l'autre. Chaque unité de conditionnement est équipée de deux organes conditionneurs contrarotatifs pouvant s'éloigner l'une de l'autre entre lesquels sont destinés à passer les végétaux coupés par les deux organes de coupe correspondant en vue de leur traitement. A cet effet, sont prévues deux paires de bras fixés à la structure porteuse et s'étendant chacune vers l'arrière et vers le bas.

Chaque organe conditionneur est lié à chacune de ses extrémités à un bras correspondant au moyen d'une liaison cylindrique.

Les unités de conditionnement sont également entraînées au moyen des organes de transmission. A cet effet est prévu un boîtier de transmission qui s'étend derrière le mécanisme de coupe entre les deux unités de conditionnement. Le boîtier de transmission comporte un premier arbre de sortie et un deuxième arbre de sortie. Chaque extrémité du premier arbre de sortie est liée à l'extrémité intérieure du premier organe conditionneur d'une unité de conditionnement correspondante au moyen d'un arbre de transmission à joints universels et chaque extrémité du deuxième arbre de sortie est liée à l'extrémité intérieure du deuxième organe conditionneur d'une unité de conditionnement correspondante au moyen d'un autre arbre de transmission à joints universels.

Cette machine agricole de récolte de végétaux connue présente cependant un certain nombre d'inconvénients.

En effet, pour assurer un bon éloignement des organes conditionneurs permettant de laisser passer plus ou moins de végétaux coupés par les organes de coupe, il faut que les arbres de transmission à joints universels aient une certaine longueur ce qui nécessite un grand espace entre lesdites unités de conditionnement et qui se traduit par des unités de conditionnement de faible largeur.

Une telle conception de cette machine agricole de récolte de végétaux ne permet pas d'obtenir un traitement optimal des végétaux coupés car la totalité desdits végétaux coupés est traitée par les deux unités de conditionnement de faible largeur.

En outre, comme décrit précédemment, chaque organe conditionneur est lié à chacune de ses extrémités à un bras correspondant au moyen d'un palier.

Compte tenu du nombre d'organes conditionneurs, ce mode de réalisation est assez onéreux.

La présente invention a pour objet de remédier aux inconvénients de cette machine agricole de récolte de végétaux connue.

A cet effet, la machine agricole de récolte de végétaux selon l'invention est caractérisée en ce que l'extrémité intérieure de chaque premier organe conditionneur est supportée par le premier arbre de sortie correspondant et que le dispositif de transmission de chaque deuxième organe conditionneur accouple l'extrémité extérieure de ce dernier au deuxième arbre de sortie correspondant.

Une telle machine agricole de récolte de végétaux permet d'avoir un gain de place permettant avantageusement d'équiper le mécanisme de récolte de deux unités de conditionnement de grande largeur pour assurer un traitement optimal des végétaux.

En outre, il n'est plus prévu de palier spécifique à l'extrémité intérieure de chaque premier organe conditionneur puisque cette dernière est supportée par le premier arbre de sortie correspondant du boîtier de transmission.

L'invention concerne également les caractéristiques suivantes :
- l'accouplement liant l'extrémité intérieure du premier organe conditionneur d'une unité de conditionnement au premier arbre de sortie correspondant du boîtier de transmission est un accouplement élastique permettant notamment d'amortir les chocs et de filtrer les vibrations dudit premier organe conditionneur et dudit premier arbre de sortie ;
- le dispositif de transmission de chaque deuxième organe conditionneur d'une unité de conditionnement comporte un carter latéral pivotant situé à l'extrémité extérieure dudit deuxième organe conditionneur ;
- ledit dispositif de transmission de chaque deuxième organe conditionneur d'une unité de conditionnement comporte en sus un arbre de transmission accouplant le deuxième arbre de sortie correspondant au carter latéral pivotant ;
- ledit arbre de transmission est accouplé au deuxième arbre de sortie correspondant au moyen d'un accouplement élastique permettant notamment d'amortir les chocs et de filtrer les vibrations dudit arbre de transmission et dudit deuxième arbre de sortie ;
- le carter latéral pivotant comporte une transmission sans fin dont la roue motrice est accouplée à l'arbre de transmission et dont la roue réceptrice est accouplée au deuxième organe conditionneur ;
- la transmission sans fin du carter latéral pivotant est une transmission par chaîne ;
- l'axe longitudinal dudit arbre de transmission est sensiblement confondu avec l'axe longitudinal du deuxième arbre de sortie correspondant ;
- le carter latéral pivotant peut pivoter sensiblement autour de l'axe longitudinal du deuxième arbre de sortie correspondant de manière à autoriser au deuxième organe conditionneur de s'éloigner du premier organe conditionneur tout en conservant l'entraînement dudit deuxième organe conditionneur ;
- le carter latéral pivotant est un carter sensiblement étanche contenant un lubrifiant de manière à réduire l'entretien de la transmission sans fin ;
- le deuxième organe conditionneur d'une unité de conditionnement est lié, à son extrémité intérieure, à un bras pivotant susceptible de pivoter autour d'un axe de pivotement s'étendant dans le voisinage de l'axe longitudinal du deuxième arbre de sortie correspondant et sensiblement parallèlement audit axe longitudinal de sorte à permettre audit deuxième organe conditionneur de s'éloigner au moins sensiblement parallèlement du premier organe conditionneur ;
- l'articulation définissant l'axe de pivotement du bras pivotant est une articulation élastique permettant notamment d'amortir les chocs et de filtrer les vibrations en provenance dudit deuxième organe conditionneur ;
- le pivotement du deuxième organe conditionneur d'une unité de conditionnement autorisé par le carter latéral pivotant et le bras pivotant se fait à l'encontre d'un organe élastiquement déformable dont l'intensité de l'action de rappel peut être modulée par un organe de réglage ce qui permet au deuxième organe conditionneur de s'éloigner du premier organe conditionneur et de revenir dans sa position initiale en fonction de la masse de végétaux coupés qui passe entre lesdits organes conditionneurs ;
- l'organe élastiquement déformable est constitué de deux barres de torsion coaxiales, s'étendant dans le prolongement l'une de l'autre et dont l'axe longitudinal commun est confondu avec l'axe de pivotement du bras pivotant ;
- il est prévu un seul organe de réglage par unité de conditionnement, qui agit sur les extrémités adjacentes des deux barres de torsion correspondantes ;
- le boîtier de transmission comporte :
   * un premier arbre de sortie unique dont chaque extrémité forme le premier arbre de sortie de l'unité de conditionnement correspondante et;
   * un deuxième arbre de sortie unique dont chaque extrémité forme le deuxième arbre de sortie de l'unité de conditionnement correspondante ;
- le boîtier de transmission comporte un arbre d'entraînement accouplé au premier arbre de sortie unique au moyen d'un premier couple de roues dentées coniques et d'une transmission sans fin, et au deuxième arbre de sortie unique au moyen d'un deuxième couple de roues dentées coniques ;
- le premier couple de roues dentées coniques et le deuxième couple de roues dentées coniques ont leur roue dentée conique motrice en commun laquelle est portée par l'arbre d'entraînement ;
- la roue motrice de la transmission sans fin du boîtier de transmission est accouplée à la roue dentée conique réceptrice du premier couple de roues dentées coniques, tandis que la roue réceptrice de ladite transmission sans fin est accouplée au premier arbre de sortie unique ;
- la transmission sans fin du boîtier de transmission est une transmission à chaîne ;
- la roue motrice de la transmission sans fin du boîtier de transmission et la roue dentée conique réceptrice du premier couple de roues dentées coniques forment un ensemble coaxial au deuxième arbre de sortie unique mais non lié en rotation à celui-ci ;
- le boîtier de transmission comporte un troisième arbre de sortie destiné à entraîner le mécanisme de coupe ;
- l'arbre d'entraînement est accouplé au troisième arbre de sortie au moyen d'un troisième couple de roues dentées coniques ;
- le premier couple de roues dentées coniques, le deuxième couple de roues dentées coniques et le troisième couple de roues dentées coniques ont leur roue dentée conique motrice en commun laquelle est portée par l'arbre d'entraînement ce qui permet notamment au boîtier de transmission d'être moins encombrant ;
- il est prévu un carter de renvoi qui reçoit le mouvement du troisième arbre de sortie et entraîne, par le haut, l'un au moins des organes de coupe du mécanisme de coupe ;
- l'(les) organes(s) de coupe entraîné(s) par le carter de renvoi est (sont) sensiblement situé(s) dans le plan vertical médian de la machine dirigé suivant la direction d'avance au travail ;
- le boîtier de transmission comporte en sus un carter d'entrée avec un arbre d'entrée accouplé à l'arbre d'entraînement au moyen d'un couple de roues dentées coniques d'entrée ;
- l'axe longitudinal de l'arbre d'entraînement est dirigé vers le haut ;
- le carter d'entrée peut occuper plusieurs positions par pivotement autour de l'axe longitudinal de l'arbre d'entraînement ;
- les différentes positions angulaires que peut occuper le carter d'entrée correspondent à différentes positions que peut occuper le timon par pivotement autour de l'axe de pivotement défini par l'articulation liant le timon au châssis ;
- l'axe longitudinal de l'arbre d'entraînement est sensiblement parallèle à l'axe de pivotement défini par l'articulation liant le timon au châssis ;
- l'arbre d'entrée du carter d'entrée est accouplé à une ligne d'arbres portée au moins partiellement par le timon ;
- le boîtier de transmission comporte :
   * un premier compartiment contenant le premier couple de roues dentées coniques, le deuxième couple de roues dentées coniques et, le cas échéant, le troisième couple de roues dentées coniques, et
   * un deuxième compartiment contenant la transmission sans fin ;
- le deuxième compartiment comporte une gouttière récupérant de l'huile contenue dans le deuxième compartiment et projetée par la transmission sans fin, pour la transvaser dans le premier compartiment ;
- le premier compartiment présente une communication avec le deuxième compartiment permettant à de l'huile contenue dans le premier compartiment de retourner au deuxième compartiment ;
- le boîtier de transmission comporte en sus une pompe pompant de l'huile contenue dans le premier compartiment dans le carter d'entrée, ce dernier comportant une communication permettant à de l'huile qui y est contenue de retourner au premier compartiment ;
- l'accouplement élastique accouplant l'arbre de transmission d'un deuxième organe conditionneur au deuxième arbre de sortie unique comporte un flasque lié audit deuxième arbre de sortie unique, le flasque de l'accouplement de l'un de ces deuxièmes organes conditionneurs étant fixé sur l'extrémité correspondante dudit deuxième arbre de sortie unique, tandis que le flasque de l'accouplement de l'autre deuxième organe conditionneur est monté coulissant sur l'extrémité correspondante dudit deuxième arbre de sortie unique, un tel agencement permet de fixer ces deuxièmes organes conditionneurs au deuxième arbre de sortie même si ces derniers sont distants l'un de l'autre plus que prévu ;
- le mécanisme de récolte comporte en sus une structure porteuse et le boîtier de transmission est lié à ladite structure porteuse au moyen de trois articulations élastiques permettant notamment d'amortir les chocs et de filtrer les vibrations en provenance dudit mécanisme de récolte ou dudit boîtier de transmission pour protéger ces derniers ;
- le mécanisme de récolte comporte en sus une structure porteuse et l'extrémité extérieure de chaque premier organe conditionneur est supportée par ladite structure porteuse au moyen d'un palier élastique permettant notamment d'amortir les chocs et de filtrer les vibrations en provenance de ladite structure porteuse ou du premier organe conditionneur ;
- l'articulation liant le timon au châssis s'étend sensiblement dans le plan vertical médian de la machine dirigé suivant la direction d'avance au travail ;
- chaque deuxième organe conditionneur s'étend sensiblement au-dessus du premier organe conditionneur correspondant de manière que, lors du travail, les végétaux coupés qui passent entre les organes conditionneurs soient éjectés vers l'arrière de la machine agricole de récolte.

D'autres objets, caractéristiques et avantages de l'invention apparaissent dans la description suivante avec référence aux dessins annexés qui représentent, à titre d'exemple non limitatif, une forme de réalisation de la machine agricole de récolte de végétaux selon l'invention.

Sur ces dessins :
- la figure 1 représente une vue de dessus d'une machine agricole de récolte de végétaux sur laquelle ont été effectuées quelques coupes partielles ;
- la figure 2 est une vue arrière de la machine agricole de la figure 1 à une autre échelle, sur laquelle ont été effectuées quelques coupes partielles ;
- la figure 3 est une vue de dessus de la machine agricole de la figure 1 à une autre échelle sur laquelle ont été effectuées quelques coupes partielles ;
- la figure 4 est une vue en coupe suivant le plan IV-IV défini sur la figure 3;
- la figure 5 est une vue arrière en coupe du boîtier de transmission seul à une autre échelle avec le carter d'entrée tourné dans le plan de coupe ;
- la figure 6 est une vue de dessus du boîtier de transmission seul à une autre échelle ;
- la figure 7 est une vue en coupe suivant le plan VII-VII défini sur la figure 3 ;
- la figure 8 est une vue en coupe suivant le plan VIII-VIII défini sur la figure 6.

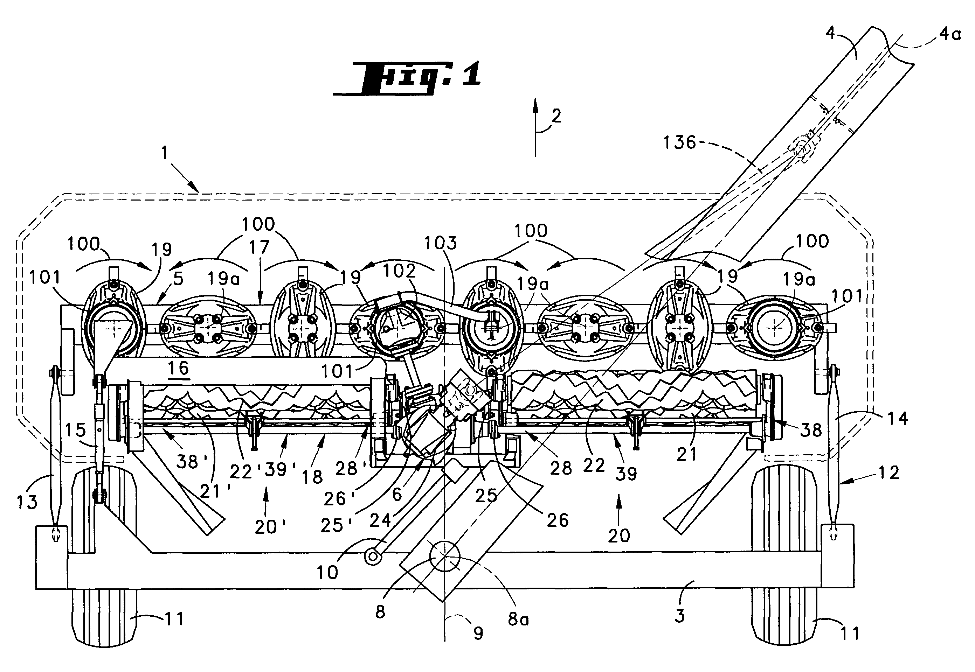

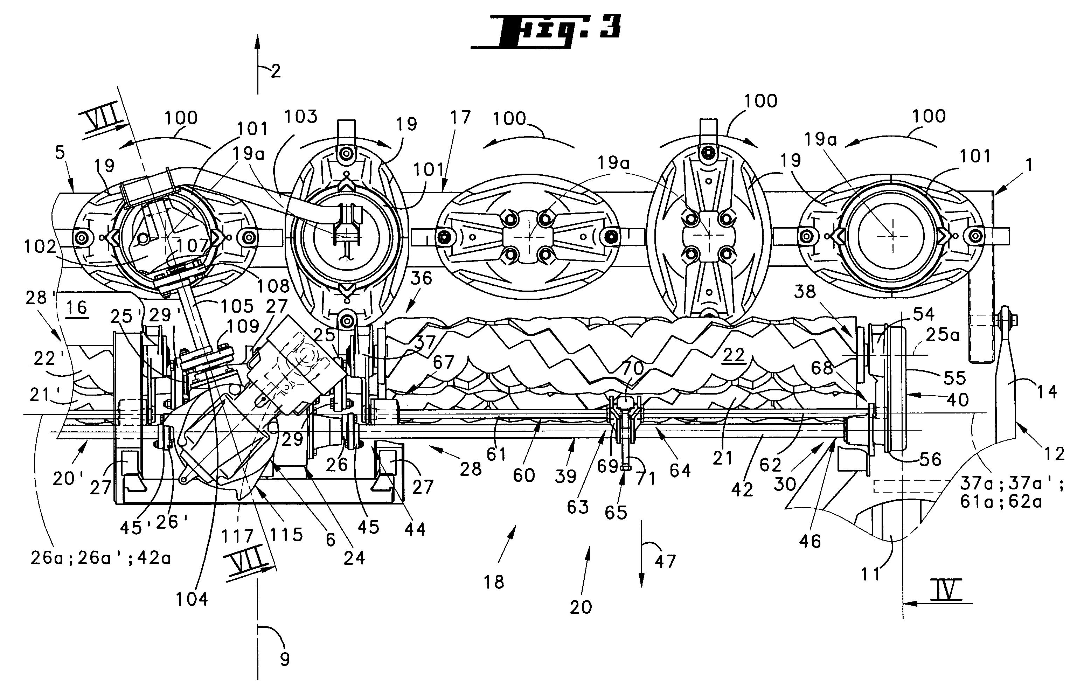

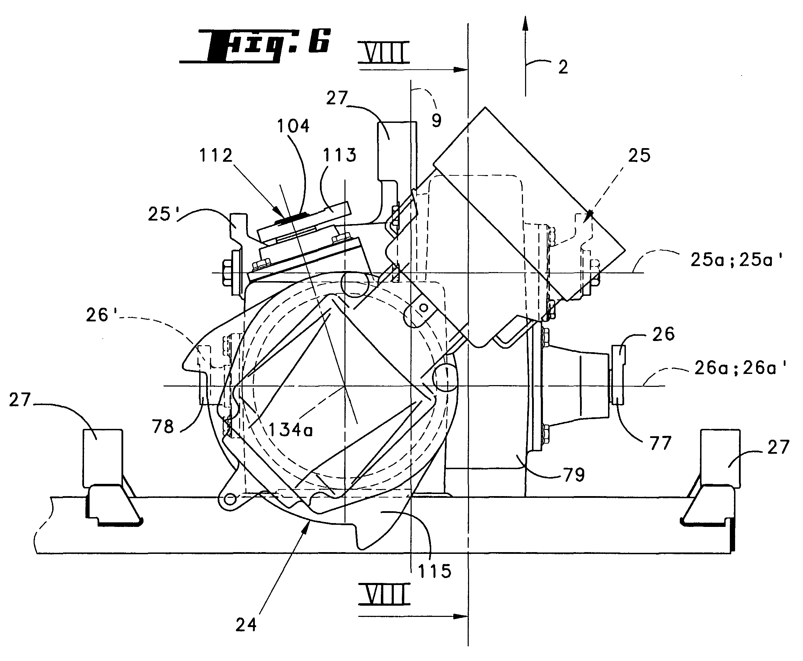

Les figures 1 à 8 montrent une machine agricole de récolte de végétaux selon l'invention, réalisée sous forme de faucheuse-conditionneuse (1). Celle-ci est destinée à être attelée à un véhicule tracteur (non représenté) qui, durant l'utilisation, la tire dans la direction d'avance (2).

Dans la suite de la description, les notions suivantes : "avant", "arrière", "devant" et "derrière" sont définies par rapport à ce sens d'avance (2) et les notions "droite" et "gauche" sont définies en regardant la faucheuse-conditionneuse (1) de l'arrière dans le sens d'avance (2).

Cette faucheuse-conditionneuse (1) comporte dans les grandes lignes un châssis mobile (3), un timon (4), un mécanisme de récolte (5) et des organes de transmission (6).

Le timon (4) est destiné à lier la faucheuse-conditionneuse (1) au véhicule tracteur. A cet effet, ledit timon (4) est lié à son extrémité arrière au châssis (3) au moyen d'une articulation (8) d'axe géométrique (8a) autour duquel il peut pivoter et à son extrémité avant au véhicule tracteur d'une manière connue par l'homme du métier. L'axe géométrique (8a) est au moins sensiblement vertical et s'étend au moins sensiblement dans le plan vertical médian (9) de la faucheuse-conditionneuse (1) dirigé suivant la direction d'avance (2) au travail. La position angulaire du timon (4) par rapport au châssis (3) peut être modifiée en faisant pivoter ledit timon (4) autour de l'axe (8a) de l'articulation (8). La mise en position angulaire souhaitée et le maintien dans celle-ci sont réalisés par un vérin de manoeuvre hydraulique (10) (représenté partiellement sur la figure 1) lié au châssis (3) et au timon (4) d'une manière connue par l'homme du métier. Grâce à cet agencement, le châssis mobile (3) peut notamment au travail, s'étendre à gauche (figure 1) ou à droite du véhicule tracteur ce qui permet avantageusement de faucher en aller et retour.

Le châssis mobile (3) s'appuie sur le sol au moyen de deux roues (11) lesquelles s'étendent près des extrémités extérieures dudit châssis (3).

Le mécanisme de récolte (5) est au moins sensiblement symétrique par rapport au plan vertical médian (9) et est lié au châssis mobile (3) au moyen d'un dispositif de suspension (12) constitué selon l'exemple représenté de trois bielles de suspension (13, 14, 15) : deux bielles de suspension inférieures (13, 14) et une bielle de suspension supérieure (15). Ces trois bielles de suspension (13, 14, 15) forment avec le châssis mobile (3) et le mécanisme de récolte (5) un quadrilatère déformable qui permet audit mécanisme de récolte (5) de se déplacer essentiellement vers le haut et vers le bas par rapport au châssis mobile (3) pour s'adapter au relief du sol indépendamment dudit châssis mobile (3). Ce mécanisme de récolte (5) comporte une structure porteuse (16) à laquelle sont liés un mécanisme de coupe (17) et un dispositif de conditionnement (18). Le mécanisme de coupe (17) est muni d'organes de coupe (19) qui sont, dans l'exemple représenté, des disques rotatifs destinés chacun à tourner autour d'un axe de rotation (19a) respectif et agencés l'un à côté de l'autre suivant une ligne s'étendant orthogonalement à la direction d'avance (2).

Le dispositif de conditionnement (18) comprend deux unités de conditionnement (20, 20') sensiblement identiques. Les différents éléments de l'unité de conditionnement (20') sont sensiblement identiques aux éléments de l'unité de conditionnement (20) et seront affectés du même numéro de repère suivi du signe (' (prime)).

Les différents éléments de l'unité de conditionnement (20') ne seront décrits que si cela s'avère nécessaire.

Les unités de conditionnement (20, 20') sont animées par des organes de transmission (6) et s'étendent sensiblement dans le prolongement l'une de l'autre et derrière le mécanisme de coupe (17).

Chaque unité de conditionnement (20, 20') comporte deux organes conditionneurs (21, 21' ; 22, 22') contrarotatifs, susceptibles de s'éloigner l'un de l'autre et entre lesquels sont destinés à passer les végétaux coupés par les organes de coupe (19) pour être éjectés vers l'arrière. Selon l'exemple représenté, l'organe conditionneur (21, 22) est un rouleau connu par l'homme du métier s'étendant sensiblement horizontalement et orthogonalement à la direction d'avance (2) et comportant à sa périphérie des nervures destinées à collaborer avec des échancrures du rouleau voisin. Le deuxième organe conditionneur (22) est situé sensiblement au-dessus du premier organe conditionneur (21) correspondant et quelque peu en avant par rapport à ce dernier.

Les organes de transmission (6) comportent un boîtier de transmission (24) s'étendant entre les deux unités de conditionnement (20, 20') et comportant pour chacune d'elles un premier arbre de sortie (25, 25') et un deuxième arbre de sortie (26, 26'). Ce boîtier de transmission (24) est lié à la structure porteuse (16) du mécanisme de récolte (5) au moyen de trois articulations élastiques (27) destinées notamment à amortir les chocs et à filtrer les vibrations en provenance du mécanisme de récolte (5) ou dudit boîtier de transmission (24) pour améliorer les conditions de travail et la durée de vie de ces derniers.

L'extrémité intérieure (28) du premier organe conditionneur (21) située le plus près du plan vertical médian (9), est liée au moyen d'un accouplement élastique (29) au premier arbre de sortie (25) correspondant et est supportée par ce dernier, tandis que l'extrémité extérieure (30) dudit premier organe conditionneur (21), est supportée par la structure porteuse (16) au moyen d'un palier élastique (31). Selon l'exemple représenté, ce palier élastique (31) est composé d'un bras de support (32) lié à l'une de ses extrémités à la structure porteuse (16) au moyen d'une articulation élastique (33) et à l'autre de ses extrémités à l'extrémité extérieure (30) du premier organe conditionneur (21) au moyen d'un roulement (34).

L'articulation élastique (33) est destinée à amortir les chocs et à filtrer les vibrations en provenance de la structure porteuse (16) ou du premier organe conditionneur (21) de manière à protéger les différents éléments et notamment le roulement (34) afin de fiabiliser ces derniers et d'augmenter leur durée de vie. Le palier élastique (31) et l'accouplement élastique (29) liant respectivement le premier organe conditionneur (21) à la structure porteuse (16) et au premier arbre de sortie (25), n'autorisent que des mouvements radiaux de faible amplitude dudit premier organe conditionneur (21).

Le deuxième organe conditionneur (22) peut s'éloigner au moins sensiblement parallèlement du premier organe conditionneur (21) de manière à permettre à une masse plus ou moins importante de végétaux coupés par les organes de coupe (19) de passer entre lesdits organes conditionneurs (21, 22).

A cet effet, le deuxième organe conditionneur (22) de l'unité de conditionnement (20) est lié à son extrémité intérieure (36) à un bras pivotant (37) susceptible de pivoter autour d'un axe de pivotement (37a).

A son extrémité extérieure (38), le deuxième organe conditionneur (22) est lié au deuxième arbre de sortie (26) du boîtier de transmission (24) au moyen d'un dispositif de transmission (39) susceptible de pivoter autour de l'axe longitudinal (26a) dudit deuxième arbre de sortie (26).

L'axe de pivotement (37a) du bras pivotant (37) s'étend dans le voisinage de l'axe longitudinal (26a) du deuxième arbre de sortie (26) correspondant et au moins sensiblement parallèlement aussi à l'axe longitudinal (26a) de manière à permettre audit deuxième organe conditionneur (22) de s'éloigner au moins sensiblement parallèlement du premier organe conditionneur (21).

Ce dispositif de transmission (39) du deuxième organe conditionneur (22) comporte un carter latéral pivotant (40) et un arbre de transmission (42).

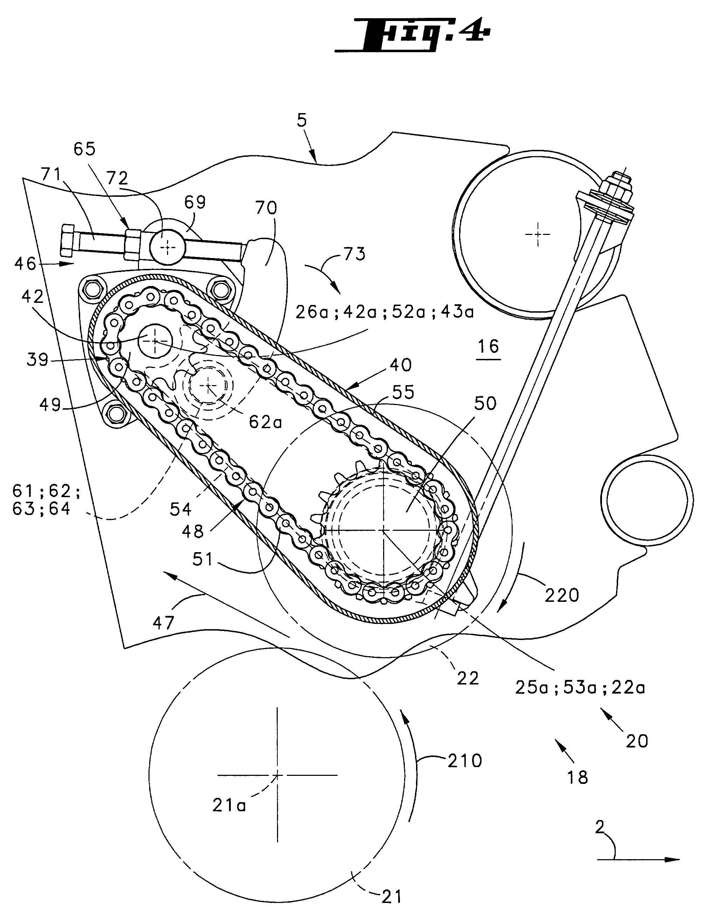

Ce carter latéral pivotant (40) est situé à l'extrémité extérieure (38) du deuxième organe conditionneur (22) et est lié à la structure porteuse (16) au moyen d'une articulation cylindrique (43) d'axe longitudinal (43a) au moins sensiblement horizontal et parallèle à l'axe longitudinal (22a) dudit deuxième organe conditionneur (22). A la lumière de la figure 4, on voit que le carter latéral pivotant (40) est incliné vers l'avant et vers le bas de telle sorte que l'axe longitudinal (22a) du deuxième organe conditionneur (22) est situé devant et en dessous de l'axe longitudinal (43a) de l'articulation cylindrique (43). On remarquera encore que l'axe longitudinal (21a) du premier organe conditionneur (21) est situé plus bas que l'axe longitudinal (22a) et dans un plan vertical implanté entre les axes longitudinaux (22a, 43a) de manière que les végétaux coupés passant entre les organes conditionneurs (21, 22) qui sont animés en rotation suivant les sens (210, 220), soient projetés vers l'arrière et vers le haut dans la direction d'éjection (47).

A son extrémité intérieure (44), l'arbre de transmission (42) est accouplé au deuxième arbre de sortie (26) correspondant du boîtier de transmission (24) au moyen d'un accouplement élastique (45) permettant notamment d'amortir les chocs et de filtrer les vibrations dudit arbre de transmission (42) et dudit deuxième arbre de sortie (26). A son extrémité extérieure (46), l'arbre de transmission (42) est lié à une transmission sans fin (48) appartenant au carter latéral pivotant (40). Selon l'exemple représenté, cette transmission sans fin (48) est une transmission par chaîne comportant une roue motrice (49) fixée à l'extrémité extérieure (46) de l'arbre de transmission (42) et une roue réceptrice (50) fixée sur le deuxième organe conditionneur (22), les deux roues (49, 50) étant reliées entre elles par une chaîne (51). A son extrémité extérieure (46), l'arbre de transmission (42) est lié au carter latéral pivotant (40) au moyen d'une articulation cylindrique (52) d'axe longitudinal (52a). A son extrémité extérieure (38), le deuxième organe conditionneur (22) est également lié au carter latéral pivotant (40) au moyen d'une articulation cylindrique (53) d'axe longitudinal (53a) au moins sensiblement confondu avec l'axe longitudinal (22a).

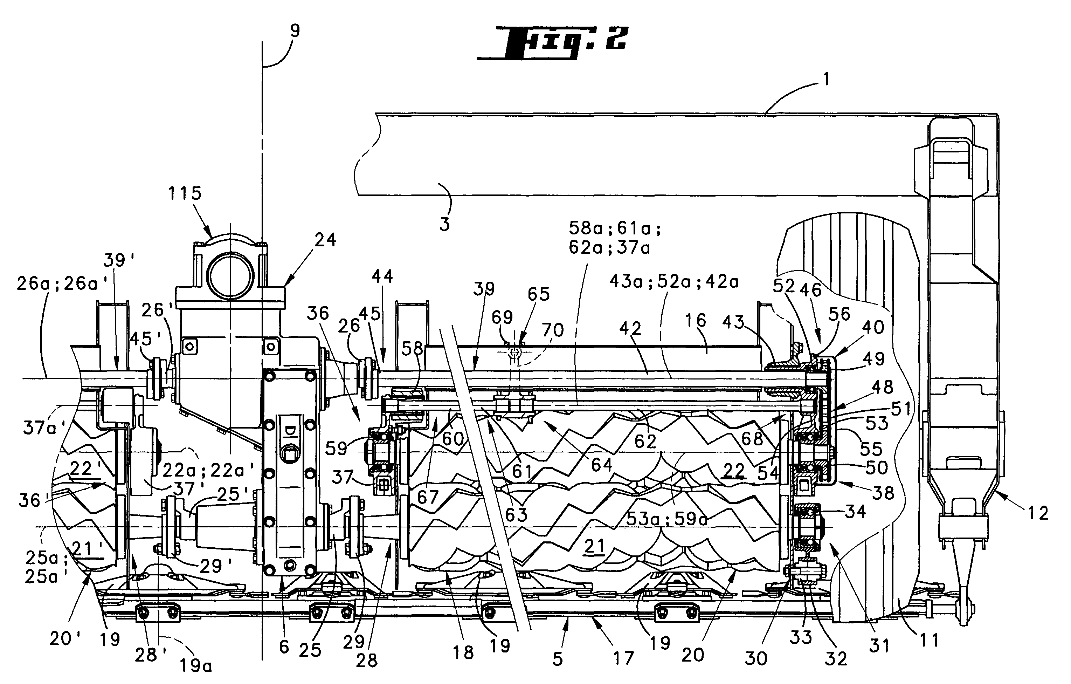

A la lumière des figures 2 et 4, on voit en outre que les axes longitudinaux (26a, 42a, 43a, 52a) respectivement du deuxième arbre de sortie (26), de l'arbre de transmission (42) et des articulations cylindriques (43, 52) sont au moins sensiblement confondus, ce qui autorise au carter latéral pivotant (40) de pivoter autour dudit axe longitudinal (26a) dudit deuxième arbre de sortie (26) tout en conservant l'entraînement du deuxième organe conditionneur (22). On remarquera encore que le carter latéral pivotant (40) est un carter sensiblement étanche contenant un lubrifiant destiné à réduire l'usure et l'échauffement de la transmission sans fin (48). A cet effet, le carter latéral pivotant (40) comporte un support (54) sur lequel est fixé un couvercle (55) renfermant la transmission sans fin (48), entre ledit support (54) et ledit couvercle (55) est prévu un joint d'étanchéité (56) destiné à assurer l'étanchéité du carter latéral pivotant (40).

Le bras pivotant (37) comporte à une de ses extrémités une articulation élastique (58) le liant d'une part à la structure porteuse (16) et définissant d'autre part l'axe de pivotement (37a) dudit bras pivotant (37), ladite articulation élastique (58) permettant en sus d'amortir les chocs et de filtrer les vibrations en provenance du deuxième organe conditionneur (22). A l'autre extrémité, le bras pivotant (37) est lié à l'extrémité intérieure (36) du deuxième organe conditionneur (22) au moyen d'une articulation cylindrique (59) d'axe longitudinal (59a) au moins sensiblement confondu avec l'axe longitudinal (22a) dudit deuxième organe conditionneur (22).

Le pivotement du deuxième organe conditionneur (22) de l'unité de conditionnement (20) autorisé par le carter latéral pivotant (40) et le bras pivotant (37) se fait à l'encontre d'un organe élastiquement déformable (60) qui est, selon l'exemple représenté, constitué de deux barres de torsion (61, 62) coaxiales, s'étendant dans le prolongement l'une de l'autre et dont les axes longitudinaux (61a, 62a) sont confondus avec l'axe de pivotement (37a) du bras pivotant (37).

A la lumière des figures 2 et 4, on voit que les deux barres de torsion (61, 62) sont situées devant l'arbre de transmission (42) et quelque peu plus bas que ce dernier.

Les deux barres de torsion (61, 62) sont, à leurs extrémités centrales (63, 64) correspondantes, adjacentes et liées à un organe de réglage (65). L'extrémité intérieure (67) de la barre de torsion (61) est fixée au bras pivotant (37) de manière que l'axe longitudinal (61a) soit confondu avec l'axe longitudinal (58a) de l'articulation élastique (58). L'extrémité extérieure (68) de la barre de torsion (62) est fixée au support (54) du carter latéral pivotant (40). L'organe de réglage (65) permet de moduler l'intensité de l'action de rappel des deux barres de torsion (61, 62) ce qui permet au deuxième organe conditionneur (22) de s'éloigner du premier organe conditionneur (21) et de revenir dans sa position initiale en fonction de la masse de végétaux coupés qui passe entre lesdits organes conditionneurs (21, 22). Cet organe de réglage (65) est situé sensiblement à mi-distance entre l'articulation élastique (58) et le carter latéral pivotant (40) et agit sur les extrémités (63, 64) adjacentes des deux barres de torsion (61, 62).

L'organe de réglage (65) comporte un support d'appui (69) fixé sur la structure porteuse (16). Dans la partie inférieure du support d'appui (69) est logé, de manière pivotante, un levier basculant (70) lequel reçoit à sa partie inférieure les extrémités centrales (63, 64) des deux barres de torsion correspondantes (61, 62). A la partie supérieure du levier basculant (70) est en appui une vis de réglage (71) vissée dans un tourillon (72) monté pivotant dans la partie supérieure du support d'appui (69).

Lorsque l'opérateur souhaite augmenter l'intensité de l'action de rappel des deux barres de torsion (61, 62), ce qui revient à augmenter l'intensité de conditionnement des végétaux coupés passant entre les organes conditionneurs (21, 22) correspondants, il visse (vue de l'arrière, figure 2) la vis de réglage (71) dans le sens des aiguilles d'une montre, laquelle fait basculer le levier basculant (70) vers l'avant dans le sens de la flèche (73) ce qui a pour effet de tordre les deux barres de torsion (61, 62).

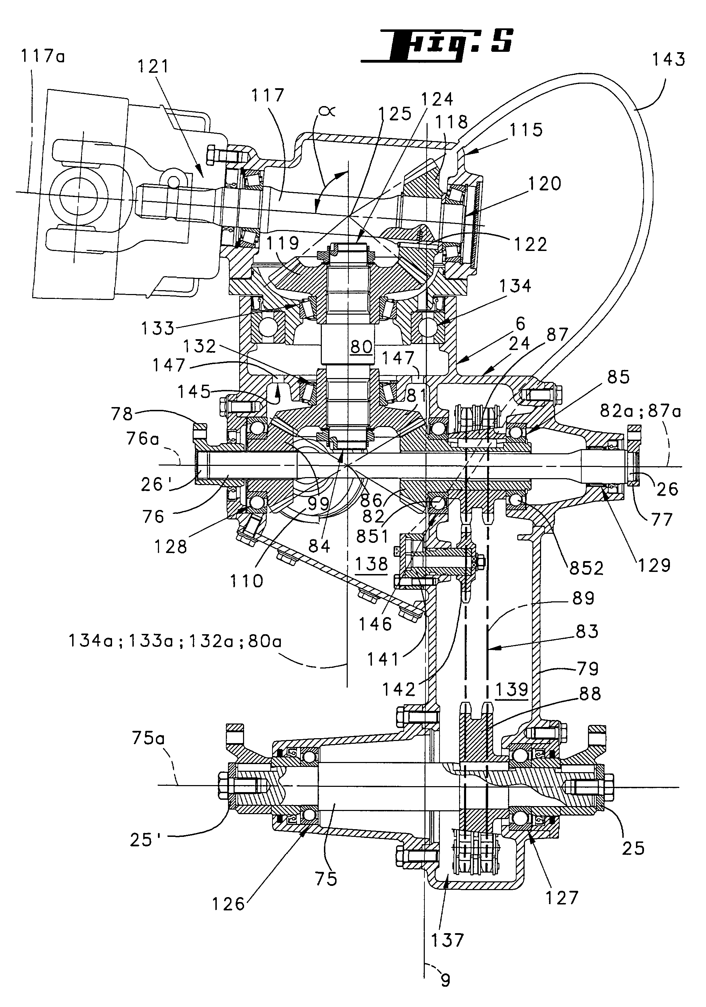

A la lumière des figures 5 à 8, on voit le boîtier de transmission (24). On remarquera que chaque premier arbre de sortie (25, 25') lié au premier organe conditionneur (21, 21') d'une unité de conditionnement (20, 20') est formé par une extrémité d'un premier arbre de sortie unique (75) et que le deuxième arbre de sortie (26, 26') lié au deuxième organe conditionneur (22, 22') d'une unité de conditionnement (20, 20') est formé par une extrémité d'un deuxième arbre de sortie unique (76). Les axes longitudinaux (75a, 76a) des deux arbres de sortie uniques (75, 76) sont confondus avec les axes longitudinaux (25a, 25a' ; 26a, 26a') des arbres de sortie (25, 25' ; 26, 26') et s'étendent au moins sensiblement horizontalement et transversalement par rapport à la direction d'avance (2). On voit que l'axe longitudinal (75a) du premier arbre de sortie unique (75) est situé plus bas et devant l'axe longitudinal (76a) du deuxième arbre de sortie unique (76).

On notera que l'accouplement élastique (45, 45') accouplant l'arbre de transmission (42, 42') du dispositif de transmission (39, 39') au deuxième arbre de sortie unique (76) comporte un flasque (77, 78) lié audit deuxième arbre de sortie unique (76). Le flasque (77) situé à l'extrémité droite du deuxième arbre de sortie unique (76) est fixé sur ce dernier, tandis que le flasque (78) est monté coulissant sur l'extrémité gauche dudit deuxième arbre de sortie unique (76) ce qui permet de fixer les deux deuxièmes organes conditionneurs (22, 22') des unités de conditionnement (20, 20') audit deuxième arbre de sortie unique (76) même si ces derniers sont distants l'un de l'autre plus que prévu.

On notera encore que le boîtier de transmission (24) comporte un carter principal (79) étanche et un arbre d'entraînement (80) d'axe longitudinal (80a) accouplé au premier arbre de sortie unique (75) au moyen d'un premier couple de roues dentées coniques (81-82) et d'une transmission sans fin (83). L'axe longitudinal (80a) de l'arbre d'entraînement (80) est dirigé vers le haut, plus précisément il s'étend au moins sensiblement verticalement aux alentours du plan vertical médian (9), et est au moins sensiblement parallèle à l'axe de pivotement (8a) défini par l'articulation (8) liant le timon (4) au châssis (3).

La roue dentée conique motrice (81) du premier couple de roues dentées coniques (81-82) est portée par l'arbre d'entraînement (80), plus précisément ladite roue dentée conique motrice (81) est fixée à l'extrémité inférieure (84) dudit arbre d'entraînement (80) de manière que sa denture s'étende vers le bas. La roue dentée conique réceptrice (82) du premier couple de roues dentées coniques (81-82) est guidée en rotation dans le carter principal (79) au moyen d'un palier (85) composé, selon l'exemple représenté, de deux roulements (851, 852) de manière que son axe longitudinal (82a) soit au moins sensiblement confondu avec l'axe longitudinal (76a) du deuxième arbre de sortie unique (76).

La roue dentée conique réceptrice (82) engrène avec la roue dentée conique motrice (81) de manière que la denture de ladite roue dentée conique réceptrice (82) s'étende vers la gauche et converge vers un même point (86) que la denture de ladite première roue dentée conique (81).

La transmission sans fin (83) est, selon l'exemple représenté, une transmission à chaîne qui comporte une roue motrice (87), une roue réceptrice (88) et une chaîne (89) reliant les deux roues (87, 88).

La roue motrice (87) est accouplée rigidement à la roue dentée conique réceptrice (82) de sorte que l'axe longitudinal (87a) de ladite roue motrice (87) soit confondu avec l'axe longitudinal (82a) de ladite roue dentée conique réceptrice (82) de manière à former un ensemble (82-87) coaxial au deuxième arbre de sortie unique (76). A cet effet, ledit deuxième arbre de sortie unique (76) s'étend longitudinalement au travers de l'ensemble (82-87) sans être lié à celui-ci, ce qui permet audit arbre de sortie unique (76) de tourner autour du même axe de rotation que ledit ensemble (82-87) à une vitesse différente. La roue réceptrice (88) quant à elle est accouplée rigidement au premier arbre de sortie unique (75).

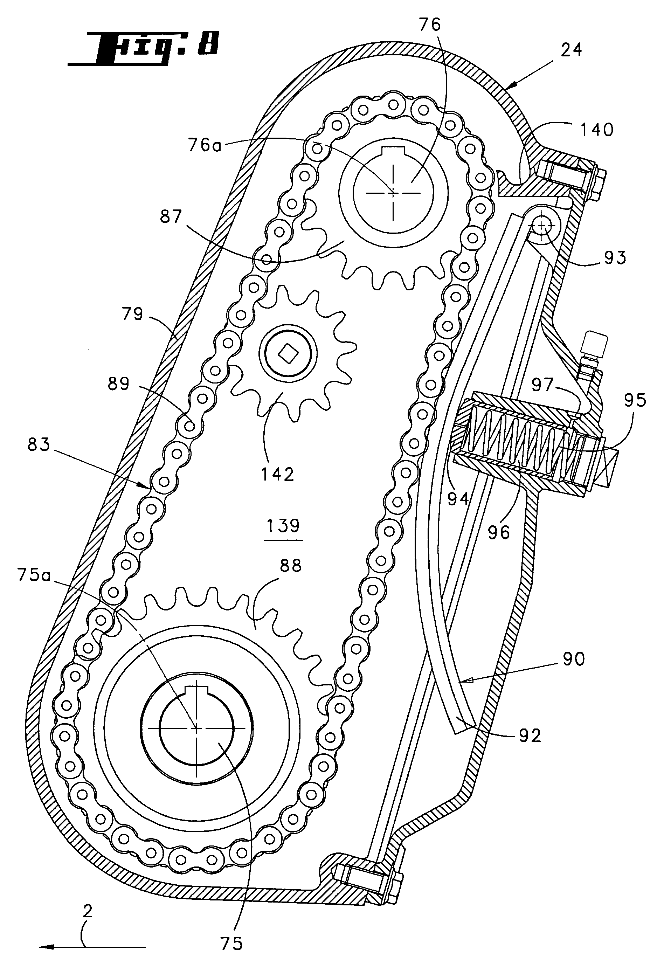

On remarquera à la lumière de la figure 8 que la transmission sans fin (83) est en sus dotée d'un tendeur de chaîne (90) comportant un patin (92) articulé au carter principal (79) au moyen d'une articulation (93). A l'arrière du patin (92) est prévu un piston (94) guidé dans le carter principal (79) qui, combiné avec un ressort de compression (95), applique le patin (92) sur la chaîne (89) de manière à tendre cette dernière. Le piston (94) et le ressort de compression (95) s'étendent à l'intérieur d'une chambre (96) formé par le carter principal (79). On remarquera que le carter principal (79) comporte un orifice (97) débouchant dans la chambre (96) ce qui autorise à une partie du lubrifiant contenu dans le carter principal (79) de s'introduire dans ladite chambre (96) et de l'occuper ce qui permet avantageusement d'amortir, lors du fonctionnement de la faucheuse-conditionneuse (1), les mouvements du piston (94) engendrés par les battements de la chaîne (89).

On notera que selon l'exemple représenté, la roue motrice (87) et la roue réceptrice (88) de la transmission sans fin (83) sont des roues doubles et que la chaîne (89) est une chaîne double.

L'arbre d'entraînement (80) du boîtier de transmission (24) est également accouplé au deuxième arbre de sortie unique (76) au moyen d'un deuxième couple de roues dentées coniques (81-99). On remarquera que le deuxième couple de roues dentées coniques (81-99) a la même roue dentée conique motrice (81) que le premier couple de roues dentées coniques (81-82). A cet effet, le deuxième couple de roues dentées coniques (81-99) est formé par la roue dentée conique motrice (81) décrite précédemment et par une roue dentée conique réceptrice (99) fixé coaxialement sur le deuxième arbre de sortie unique (76). La roue dentée conique réceptrice (99) engrène avec la roue dentée conique motrice (81) de manière que la denture de ladite roue dentée conique réceptrice (99) s'étende vers la droite et converge vers le même point (86) que la denture desdites roues dentées (81 et 82).

Chaque organe de coupe (19) du mécanisme de coupe (17) est destiné à être entraîné en rotation autour de son axe de rotation (19a) dans le sens de rotation (100) respectif.

On remarquera que les organes de coupe (19) situés aux extrémités du mécanisme de coupe (17) et les organes de coupe (19) adjacents au plan vertical médian (9) sont dotés d'une coiffe d'andainage (101) respective s'étendant au-dessus de l'organe de coupe (19) correspondant. Au front de coupe, les sens de rotation (100) des organes de coupe (19) situés aux extrémités du mécanisme de coupe (17), convergent alors que les sens de rotation (100) des organes de coupe (19) adjacents au plan vertical médian (9), divergent. Un tel agencement permet notamment aux végétaux coupés d'être andainés de part et d'autre vers les unités de conditionnement (20, 20') correspondantes.

Les organes de coupe (19) sont destinés à être entraînés en rotation par un organe de coupe (19) moteur. Selon cet exemple de réalisation, les organes de coupe (19) sont entraînés par l'organe de coupe (19) moteur situé à gauche du plan vertical médian (9) et adjacent à ce dernier.

A cet effet, il est prévu un carter de renvoi (102) agencé d'une part au-dessus de la coiffe d'andainage (101) de l'organe de coupe (19) moteur, de manière à entraîner ce dernier par le haut, et d'autre part à la coiffe d'andainage (101) de l'organe de coupe (19) adjacent situé de l'autre côté du plan vertical médian (9) au moyen d'une barre d'immobilisation (103). Un tel agencement permet d'une part d'immobiliser le carter de renvoi (102) et de rigidifier les coiffes d'andainage (101) des deux organes de coupe (19) correspondants.

Le carter de renvoi (102) reçoit le mouvement d'un troisième arbre de sortie (104) appartenant au boîtier de transmission (24). A cet effet, il est prévu un arbre de transmission intermédiaire (105) s'étendant au moins sensiblement horizontalement et transversalement à la direction d'avance (2). Ledit arbre de transmission intermédiaire (105) est lié à l'une de ses extrémités à un arbre d'entrée (107) du carter de renvoi (102) au moyen d'un accouplement élastique (108) semblable à l'accouplement élastique (45) liant l'arbre de transmission (42) au deuxième arbre de sortie (26). A l'autre de ses extrémités l'arbre de transmission intermédiaire (105) est lié au troisième arbre de sortie (104) du boîtier de transmission (24) au moyen d'un accouplement élastique (109) semblable à l'accouplement (108). On notera que l'arbre d'entrée (107) du carter de renvoi (102) peut être déplacé quelque peu le long de son axe longitudinal (107a) ce qui permet de coupler ledit arbre d'entrée (107) au troisième arbre de sortie (104) au moyen de l'arbre (105) et des accouplements élastiques (108, 109) même si lesdits arbres (104, 107) sont distants l'un de l'autre plus que prévu.

Le troisième arbre de sortie (104) s'étend sensiblement horizontalement et transversalement à la direction d'avance (2) et est dirigé dans la direction du carter de renvoi (102). L'axe longitudinal (104a) du troisième arbre de sortie (104) passe par le point (86) défini précédemment.

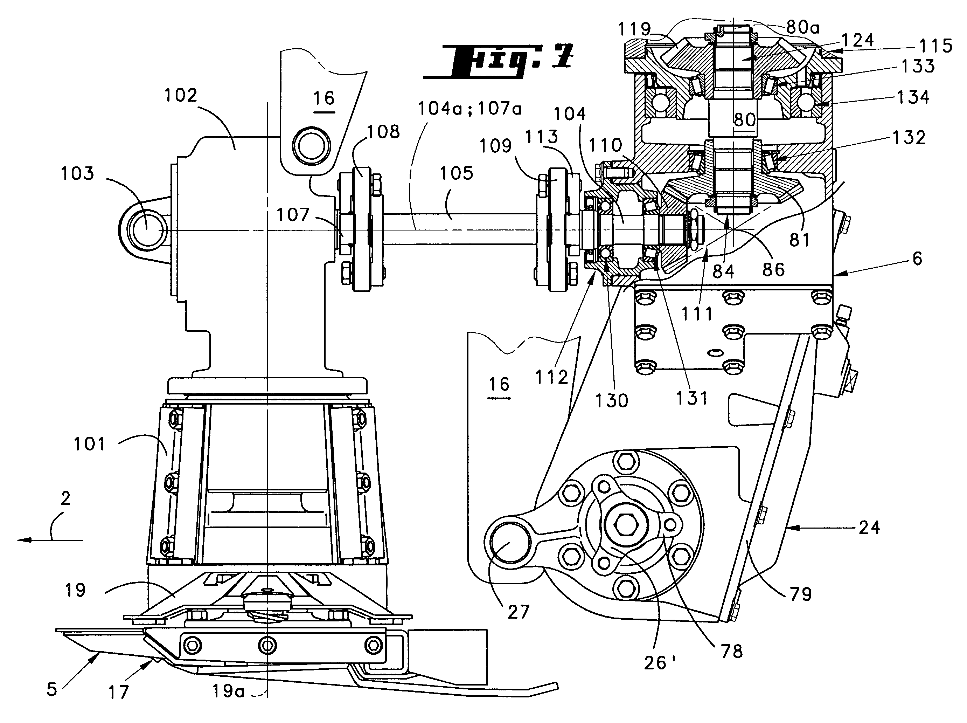

A la lumière de la figure 7, on voit que l'arbre d'entraînement (80) est en sus accouplé au troisième arbre de sortie (104) au moyen d'un troisième couple de roues dentées coniques (81-110). Ce troisième couple de roues dentées coniques (81-110) a la même roue dentée conique motrice (81) que le premier et le deuxième couple de roues dentées coniques (81-82, 81-99). A cet effet, le troisième couple de roues dentées coniques (81-110) est formé par la roue dentée conique motrice (81) décrite précédemment et par une roue dentée conique réceptrice (110) fixée coaxialement à l'extrémité (111) du troisième arbre de sortie (104) s'étendant à l'intérieur du carter principal (79).

La roue dentée conique réceptrice (110) engrène avec la roue dentée conique motrice (81) de manière que la denture de ladite roue dentée conique réceptrice (110) s'étende transversalement vers l'arrière et converge vers le même point (86) que les dentures des roues dentées coniques (81, 82, 99).

L'extrémité (112) du troisième arbre de sortie (104) s'étend à l'extérieur du carter principal (79) et comporte un flasque (113) fixé sur celle-ci, ledit flasque (113) faisant partie de l'accouplement élastique (109).

Le boîtier de transmission (24) comporte en sus un carter d'entrée (115) agencé de manière pivotante sur le dessus du carter principal (79).

Le carter d'entrée (115) comporte un arbre d'entrée (117) d'axe longitudinal (117a) s'étendant, selon une vue de dessus, sensiblement parallèlement à l'axe longitudinal (4a) du timon (4). En vue de côté du carter d'entrée (115) tel que représenté sur la figure 5, l'axe longitudinal (117a) forme un angle (a) avec l'axe longitudinal (80a) supérieur à 90°. En d'autres termes, l'axe longitudinal (117a) de l'arbre d'entrée (117) est destiné à s'étendre sensiblement horizontalement lorsque le mécanisme de récolte (5) occupe une position de travail dite normale, ladite position de travail normale étant celle où ledit mécanisme de récolte (5) est quelque peu incliné vers l'avant et vers le bas de manière à rapprocher les organes de coupe (19) du sol pour couper les végétaux relativement près du sol.

L'arbre d'entrée (117) du carter d'entrée (115) est accouplé à l'arbre d'entraînement (80) au moyen d'un couple de roues dentées coniques d'entrée (118-119).

La roue dentée conique motrice (118) dudit couple (118-119) est liée coaxialement à l'une (120) des extrémités (120, 121) de l'arbre d'entrée (117) au moyen d'une roue libre (122) qui est destinée à autoriser la transmission du mouvement dudit arbre d'entrée (117) à ladite roue dentée conique motrice (118) mais pas l'inverse.

La roue dentée conique réceptrice (119) dudit couple (118-119) est fixée coaxialement à l'extrémité supérieure (124) de l'arbre d'entraînement (80).

La denture de la roue dentée conique réceptrice (119) s'étend vers le haut et la denture de la roue dentée conique motrice (118) s'étend vers l'autre extrémité (121) de l'arbre d'entrée (117). La roue dentée conique réceptrice (119) engrène avec la roue dentée conique motrice (118) de manière que leurs dentures convergent vers un point d'intersection (125) des axes longitudinaux (80a et 117a) de l'arbre d'entraînement (80) et de l'arbre d'entrée (117).

A la lumière des figures 5 et 7, on voit que le premier arbre de sortie unique (75), le deuxième arbre de sortie unique (76) et le troisième arbre de sortie (104) sont chacun guidés en rotation dans le carter principal (79) au moyen de deux paliers (126, 127 ; 128, 129 ; 130, 131) respectifs.

L'extrémité inférieure (84) de l'arbre d'entraînement (80) est guidée en rotation dans le carter principal (79) au moyen d'un palier (132) alors que l'extrémité supérieure (124) dudit arbre d'entraînement (80) s'étend dans le carter d'entrée (115) dans lequel elle y est guidée au moyen d'un palier (133), ledit carter d'entrée (115) étant lui même guidé en rotation dans ledit carter principal (79) au moyen d'un palier (134) d'axe longitudinal (134a) confondu avec l'axe longitudinal (80a) dudit arbre d'entraînement (80) et les axes longitudinaux (132a, 133a) des paliers (132, 133).

Un tel agencement du carter d'entrée (115) permet à celui-ci de pivoter autour de son axe de pivotement matérialisé par l'axe longitudinal (134a) du palier (134) tout en conservant la transmission du mouvement de l'arbre d'entrée (117) aux arbres de sortie (75, 76, 104).

La faucheuse-conditionneuse (1) comporte en outre une ligne d'arbres (136) portée au moins partiellement par le timon (4). Cette ligne d'arbres (136) est liée d'une part à une prise de puissance du véhicule moteur (non représentée) et d'autre part à l'arbre d'entrée (117) du carter d'entrée (115).

Pour assurer une bonne transmission du mouvement de rotation de la prise de puissance du véhicule moteur à l'arbre d'entrée (117) du carter d'entrée (115), les différentes positions angulaires que peut occuper ce dernier sont destinées à correspondre à différentes positions que peut occuper le timon (4) par pivotement autour de l'axe longitudinal (8a) de l'articulation (8). A cet effet, il est prévu un moyen de pilotage (non représenté) destiné à pivoter le carter d'entrée (115) en fonction de la position que peut occuper le timon (4).

Pour assurer un bon fonctionnement du boîtier de transmission (24), il est prévu un dispositif de lubrification à l'huile (137). A cet effet, le premier couple de roues dentées coniques (81, 82), le deuxième couple de roues dentées coniques (81-99) et le troisième couple de roues dentées coniques (81-110) sont contenus dans un premier compartiment (138) du carter principal (79) et la transmission sans fin (83) est contenue dans un deuxième compartiment (139).

Le deuxième compartiment (139) comporte une gouttière (140) récupérant de l'huile projetée par la chaîne (89) de la transmission sans fin (83) contenue dans ledit deuxième compartiment (139) pour la transvaser dans le premier compartiment (138) du carter principal (79).

Au fond du premier compartiment (138) est prévu une pompe hydraulique (141) entraînée par la chaîne (89) par l'intermédiaire d'une roue d'entraînement (142). Cette pompe hydraulique (141) pompe de l'huile contenue dans le premier compartiment (138) dans le carter d'entrée (115) au moyen d'une conduite flexible (143) débouchant dans la partie supérieure dudit carter d'entrée (115).

On notera en sus que le carter d'entrée (115) comporte une communication (145) qui permet à de l'huile qui y est contenue, de retourner au premier compartiment (138). Le premier compartiment (138) présente quant à lui, une communication (146) avec le deuxième compartiment (139) permettant à de l'huile contenue dans le premier compartiment (138) de retourner audit deuxième compartiment (139).

Selon l'exemple de réalisation représenté, la communication (145) du carter d'entrée (115) avec le premier compartiment (138) est réalisée au moyen de trous (147) permettant à de l'huile contenue dans ledit carter d'entrée (115) de s'écouler dans le premier compartiment (138).

Lors du fonctionnement, la pompe hydraulique (141) est complètement immergée dans de l'huile stationnée dans le fond du premier compartiment (138).

Le niveau de cette huile est déterminé par le roulement (851) du palier (85) situé entre la roue dentée conique réceptrice (82) du premier couple (81-82) et la roue motrice (87). En effet, le surplus d'huile contenue dans le premier compartiment (138) peut retourner au deuxième compartiment (139) en s'écoulant au travers du roulement (851), ledit roulement (851) formant la communication (146) entre ledit premier compartiment (138) et ledit deuxième compartiment (139).

L'entraînement de la faucheuse-conditionneuse (1) fonctionne de la manière suivante : la prise de puissance du véhicule moteur (non représenté) entraîne en rotation la ligne d'arbres (136) portée par le timon (4) laquelle entraîne elle-même l'arbre d'entrée (117) du carter d'entrée (115). Le mouvement à l'intérieur du carter d'entrée (115) et du carter principal (79) du boîtier de transmission (24) passe chronologiquement par l'arbre d'entrée (117), la roue libre (122), la roue dentée conique motrice (118), la roue dentée conique réceptrice (119), l'arbre d'entraînement (80), et la roue dentée conique motrice (81). Ensuite le mouvement est transmis simultanément à la roue dentée conique réceptrice (82), la roue dentée conique réceptrice (99) et la roue dentée conique réceptrice (110).

La transmission du mouvement, à partir de la roue dentée conique réceptrice (82) passe, par la suite, chronologiquement par la roue motrice (87) de la transmission sans fin (83), la chaîne (89), et la roue réceptrice (88) pour arriver au premier arbre de sortie unique (75).

La transmission du mouvement, à partir de la roue dentée conique réceptrice (99) passe par la suite directement au deuxième arbre de sortie unique (76).

A partir de la roue dentée conique réceptrice (110), le mouvement passe directement au troisième arbre de sortie (104), pour ensuite passer chronologiquement à l'arbre de transmission intermédiaire (105), et l'arbre d'entrée (107) du carter de renvoi (102) lequel entraîne l'organe de coupe (19) moteur correspondant.

A partir du premier arbre de sortie unique (75), le mouvement est directement transmis de part et d'autre au premier organe conditionneur (21, 21') des unités de conditionnement (20, 20').

A partir du deuxième arbre de sortie unique (76), le mouvement passe chronologiquement, de part et d'autre, par l'arbre de transmission (42, 42'), la roue motrice (49, 49'), la chaîne (51, 51') et la roue réceptrice (50, 50') du carter latéral pivotant (40, 40') correspondant, et par le deuxième organe conditionneur (22, 22') correspondant des unités de conditionnement (20, 20').

Le dispositif de lubrification à l'huile (137) du boîtier de transmission (24) fonctionne de la manière suivante : à l'arrêt, une partie de l'huile est stationnée au fond du deuxième compartiment (139) et une autre partie est stationnée au fond du premier compartiment (138) jusqu'au niveau du roulement (851).

Lors de la mise en route et lors du fonctionnement, de l'huile contenue dans le deuxième compartiment (139) est projetée par la chaîne (89) et est récupérée par la gouttière (140), celle-ci débouchant dans le premier compartiment (138), déverse l'huile récupérée dans ce dernier. L'huile contenue au fond du premier compartiment (138) est pompée par la pompe hydraulique (141) dans le carter d'entrée (115) au moyen de la conduite flexible (143) s'étendant partiellement à l'extérieur du carter principal (79) et partiellement à l'extérieur du carter d'entrée (115). L'huile injectée dans le carter d'entrée (115) s'écoule par gravité vers le fond du premier compartiment (138) en passant par les trous (147) et en lubrifiant sur son passage les différents éléments contenus dans ledit carter d'entrée (115) et ledit premier compartiment (138). Le surplus d'huile contenu au fond du premier compartiment (138) s'écoule à nouveau vers le fond du deuxième compartiment (139) en passant par le roulement (851) du palier (85) et en lubrifiant sur son passage les différents éléments contenus dans ledit deuxième compartiment (139).

L'huile du dispositif de lubrification (137) circule à l'intérieur du boîtier de transmission (24) en circuit fermé.

Il est parfaitement possible que les transmissions sans fin (48, 83) du carter latéral pivotant (40) et du carter principal (79) soient des transmissions à courroies ou une cascade de roues dentées.

Il est également parfaitement imaginable que les organes conditionneurs (21, 21' ; 22, 22') des unités de conditionnement (20, 20') soient différents de ceux représentés sur les figures.

Il est en outre parfaitement imaginable que le boîtier de transmission (24) ne comporte pas de troisième arbre de sortie (104), et que les organes de coupe (19) du mécanisme de coupe (17) soient entraînés par un moyen autre que celui décrit précédemment.

## Revendications

1. Machine agricole de récolte de végétaux comportant :
- un châssis mobile (3),
- un timon (4) destiné à lier ladite machine agricole de récolte de végétaux à un véhicule tracteur et lui-même lié au châssis (3) au moyen d'une articulation (8) de sorte à pouvoir pivoter autour d'un axe de pivotement (8a) dirigé vers le haut,
- un mécanisme de récolte (5) lié au châssis mobile (3) et comportant :
* un mécanisme de coupe (17) comprenant des organes de coupe (19) destinés à couper des végétaux, et
* un dispositif de conditionnement (18) comprenant deux unités de conditionnement (20, 20') s'étendant sensiblement dans le prolongement l'une de l'autre et équipées chacune de deux organes conditionneurs (21, 21' ; 22, 22') contrarotatifs susceptibles de s'éloigner l'un de l'autre et entre lesquels sont destinés à passer les végétaux coupés par les organes de coupe (19) en vue de leur traitement,
- des organes de transmission (6) destinés, entre autres, à assurer l'animation des unités de conditionnement (20, 20') et comprenant un boîtier de transmission (24) s'étendant entre les deux unités de conditionnement (20, 20') et comportant pour chacune d'elles :
* un premier arbre de sortie (25, 25') lié, au moyen d'un accouplement (29, 29'), à l'extrémité intérieure (28, 28') du premier organe conditionneur (21, 21') proche du boîtier de transmission (24), et
* un deuxième arbre de sortie (26, 26') accouplé, au moyen d'un dispositif de transmission (39, 39'), au deuxième organe conditionneur (22, 22'),
***caractérisée en ce* que** :
- l'extrémité intérieure (28, 28') de chaque premier organe conditionneur (21, 21') est supportée par le premier arbre de sortie (25, 25') correspondant, et
- le dispositif de transmission (39, 39') de chaque deuxième organe conditionneur (22, 22') accouple l'extrémité extérieure (38, 38') de ce dernier au deuxième arbre de sortie (26, 26') correspondant.

2. Machine agricole de récolte de végétaux selon la revendication 1, ***caractérisée en ce* que** l'accouplement (29, 29') liant l'extrémité intérieure (28, 28') du premier organe conditionneur (21, 21') d'une unité de conditionnement (20, 20') au premier arbre de sortie (25, 25') correspondant du boîtier de transmission (24) est un accouplement élastique (29, 29').

3. Machine agricole de récolte de végétaux selon la revendication 1 ou 2, ***caractérisée en ce* que** le dispositif de transmission (39, 39') de chaque deuxième organe conditionneur (22, 22') d'une unité de conditionnement (20, 20') comporte un carter latéral pivotant (40, 40') situé à l'extrémité extérieure (38, 38') dudit deuxième organe conditionneur (22, 22').

4. Machine agricole de récolte de végétaux selon la revendication 3, ***caractérisée en ce* que** ledit dispositif de transmission (39, 39') de chaque deuxième organe conditionneur (22, 22') d'une unité de conditionnement (20, 20') comporte en sus un arbre de transmission (42, 42') accouplant le deuxième arbre de sortie (26, 26') correspondant au carter latéral pivotant (40, 40').

5. Machine agricole de récolte de végétaux selon la revendication 4, ***caractérisée en ce* que** ledit arbre de transmission (42, 42') est accouplé au deuxième arbre de sortie (26, 26') correspondant au moyen d'un accouplement élastique (45, 45').

6. Machine agricole de récolte de végétaux selon la revendication 4 ou 5, ***caractérisée en ce* que** le carter latéral pivotant (40, 40') comporte une transmission sans fin (48, 48') dont la roue motrice (49, 49') est accouplée à l'arbre de transmission (42, 42') et dont la roue réceptrice (50, 50') est accouplée au deuxième organe conditionneur (22, 22').

7. Machine agricole de récolte de végétaux selon la revendication 6, ***caractérisée en ce* que** la transmission sans fin (48, 48') du carter latéral pivotant (40, 40') est une transmission par chaîne.

8. Machine agricole de récolte de végétaux selon l'une quelconque des revendications 4 à 7, ***caractérisée en ce* que** l'axe longitudinal (42a, 42a') dudit arbre de transmission (42, 42') est sensiblement confondu avec l'axe longitudinal (26a, 26a') du deuxième arbre de sortie (26, 26') correspondant.

9. Machine agricole de récolte de végétaux selon la revendication 8, ***caractérisée en ce* que** le carter latéral pivotant (40, 40') peut pivoter sensiblement autour de l'axe longitudinal (26a, 26a') du deuxième arbre de sortie (26, 26') correspondant.

10. Machine agricole de récolte de végétaux selon l'une quelconque des revendications 3 à 9, ***caractérisée en ce* que** le carter latéral pivotant (40, 40') est un carter sensiblement étanche contenant un lubrifiant.

11. Machine agricole de récolte de végétaux selon l'une quelconque des revendications 1 à 10, ***caractérisée en ce* que** le deuxième organe conditionneur (22, 22') d'une unité de conditionnement (20, 20') est lié, à son extrémité intérieure (36, 36') à un bras pivotant (37, 37') susceptible de pivoter autour d'un axe de pivotement (37a, 37a') s'étendant dans le voisinage de l'axe longitudinal (26a, 26a') du deuxième arbre de sortie (26, 26') correspondant et sensiblement parallèlement audit axe longitudinal (26a, 26a').

12. Machine agricole de récolte de végétaux selon la revendication 11, ***caractérisée en ce* que** l'articulation (58, 58') définissant l'axe de pivotement (37a, 37a') du bras pivotant (37, 37') est une articulation élastique.

13. Machine agricole de récolte de végétaux selon la revendication 11 ou 12 et l'une quelconque des revendications 3 à 10, ***caractérisée en ce* que** le pivotement du deuxième organe conditionneur (22, 22') d'une unité de conditionnement (20, 20') autorisé par le carter latéral pivotant (40, 40') et le bras pivotant (37, 37') se fait à l'encontre d'un organe élastiquement déformable (60, 60') dont l'intensité de l'action de rappel peut être modulée par un organe de réglage (65, 65').

14. Machine agricole de récolte de végétaux selon la revendication 13, ***caractérisée en ce* que** l'organe élastiquement déformable (60, 60') est constitué de deux barres de torsion (61, 61' ; 62, 62') coaxiales, s'étendant dans le prolongement l'une de l'autre et dont l'axe longitudinal (61a, 61a'; 62a, 62a') commun est confondu avec l'axe de pivotement (37a, 37a') du bras pivotant (37, 37').

15. Machine agricole de récolte de végétaux selon la revendication 14, ***caractérisée en ce* qu'**il est prévu un seul organe de réglage (65, 65') par unité de conditionnement (20, 20'), qui agit sur les extrémités adjacentes (63, 63' ; 64, 64') des deux barres de torsion (61, 61' ; 62, 62') correspondantes.

16. Machine agricole de récolte de végétaux selon l'une quelconque des revendications 1 à 15, ***caractérisée en ce* que** le boîtier de transmission (24) comporte :
- un premier arbre de sortie unique (75) dont chaque extrémité forme le premier arbre de sortie (25, 25') de l'unité de conditionnement (20, 20') correspondante, et
- un deuxième arbre de sortie unique (76) dont chaque extrémité forme le deuxième arbre de sortie (26, 26') de l'unité de conditionnement (20, 20') correspondante.

17. Machine agricole de récolte de végétaux selon la revendication 16, ***caractérisée en ce* que** le boîtier de transmission (24) comporte un arbre d'entraînement (80) accouplé au premier arbre de sortie unique (75) au moyen d'un premier couple de roues dentées coniques (81-82) et d'une transmission sans fin (83), et au deuxième arbre de sortie unique (76) au moyen d'un deuxième couple de roues dentées coniques (81-99).

18. Machine agricole de récolte de végétaux selon la revendication 17, ***caractérisée en ce* que** le premier couple de roues dentées coniques (81-82) et le deuxième couple de roues dentées coniques (81-99) ont leur roue dentée conique motrice (81) en commun laquelle est portée par l'arbre d'entraînement (80).

19. Machine agricole de récolte de végétaux selon la revendication 17 ou 18, ***caractérisée en ce* que** la roue motrice (87) de la transmission sans fin (83) du boîtier de transmission (24) est accouplée à la roue dentée conique réceptrice (82) du premier couple de roues dentées coniques (81-82), tandis que la roue réceptrice (88) de ladite transmission sans fin (83) est accouplée au premier arbre de sortie unique (75).

20. Machine agricole de récolte de végétaux selon la revendication 19, ***caractérisée en ce* que** la transmission sans fin (83) du boîtier de transmission (24) est une transmission à chaîne.

21. Machine agricole de récolte de végétaux selon la revendication 19 ou 20, ***caractérisée en ce* que** la roue motrice (87) de la transmission sans fin (83) du boîtier de transmission (24) et la roue dentée conique réceptrice du premier couple de roues dentées coniques (82) forment un ensemble (82-87) coaxial au deuxième arbre de sortie unique (76), mais non lié en rotation à celui-ci.

22. Machine agricole de récolte de végétaux selon l'une quelconque des revendications 17 à 21, ***caractérisée en ce* que** le boîtier de transmission (24) comporte un troisième arbre de sortie (104) destiné à entraîner le mécanisme de coupe (17).

23. Machine agricole de récolte de végétaux selon la revendication 22, ***caractérisée en ce* que** l'arbre d'entraînement (80) est accouplé au troisième arbre de sortie (104) au moyen d'un troisième couple de roues dentées coniques (81-110).

24. Machine agricole de récolte de végétaux selon la revendication 23, ***caractérisée en ce* que** le premier couple de roues dentées coniques (81-82), le deuxième couple de roues dentées coniques (81-99) et le troisième couple de roues dentées coniques (81-110) ont leur roue dentée conique motrice (81) en commun laquelle est portée par l'arbre d'entraînement (80).

25. Machine agricole de récolte de végétaux selon la revendication 22, 23 ou 24, ***caractérisée en ce* qu'**il est prévu un carter de renvoi (102) qui reçoit le mouvement du troisième arbre de sortie (104) et entraîne, par le haut, l'un au moins des organes de coupe (19) du mécanisme de coupe (17).

26. Machine agricole de récolte de végétaux selon la revendication 25, ***caractérisée en ce* que** l'(les) organes(s) de coupe (19) entraîné(s) par le carter de renvoi (102) est (sont) sensiblement situé(s) dans le plan vertical médian (9) de la machine dirigée suivant la direction d'avance (2) au travail.

27. Machine agricole de récolte de végétaux selon l'une quelconque des revendications 17 à 26, ***caractérisée en ce* que** le boîtier de transmission (24) comporte en sus un carter d'entrée (115) avec un arbre d'entrée (117) accouplé à l'arbre d'entraînement (80) au moyen d'un couple de roues dentées coniques d'entrée (118-119).

28. Machine agricole de récolte de végétaux selon la revendication 27, ***caractérisée en ce* que** l'axe longitudinal (80a) de l'arbre d'entraînement (80) est dirigé vers le haut.

29. Machine agricole de récolte de végétaux selon la revendication 28, ***caractérisée en ce* que** le carter d'entrée (115) peut occuper plusieurs positions par pivotement autour de l'axe longitudinal (80a) de l'arbre d'entraînement (80).

30. Machine agricole de récolte de végétaux selon la revendication 29, ***caractérisée en ce* que** les différentes positions angulaires que peut occuper le carter d'entrée (115) correspondent à différentes positions que peut occuper le timon (4) par pivotement autour de l'axe de pivotement (8a) défini par l'articulation (8) liant le timon (4) au châssis (3).

31. Machine agricole de récolte de végétaux selon la revendication 28, 29 ou 30, ***caractérisée en ce* que** l'axe longitudinal (80a) de l'arbre d'entraînement (80) est sensiblement parallèle à l'axe de pivotement (8a) défini par l'articulation (8) liant le timon (4) au châssis (3).

32. Machine agricole de récolte de végétaux selon l'une quelconque des revendications 27 à 31, ***caractérisée en ce* que** l'arbre d'entrée (117) du carter d'entrée (115) est accouplé à une ligne d'arbres (136) portée au moins partiellement par le timon (4).

33. Machine agricole de récolte de végétaux selon l'une quelconque des revendications 17 à 32, ***caractérisée en ce* que** le boîtier de transmission (24) comporte :
- un premier compartiment (138) contenant le premier couple de roues dentées coniques (81-82), le deuxième couple de roues dentées coniques (81-99) et, le cas échéant, le troisième couple de roues dentées coniques (81-110), et
- un deuxième compartiment (139) contenant la transmission sans fin (83).

34. Machine agricole de récolte de végétaux selon la revendication 33, ***caractérisée en ce* que** :
- le deuxième compartiment (139) comporte une gouttière (140) récupérant de l'huile contenue dans le deuxième compartiment (139) et projetée par la transmission sans fin (83), pour la transvaser dans le premier compartiment (138), et
- le premier compartiment (138) présente une communication (146) avec le deuxième compartiment (139) permettant à de l'huile contenue dans le premier compartiment (138) de retourner au deuxième compartiment (139).

35. Machine agricole de récolte de végétaux selon la revendication 27 et la revendication 33 ou 34, ***caractérisée en ce* que** le boîtier de transmission (24) comporte en sus une pompe (141) pompant de l'huile contenue dans le premier compartiment (138) dans le carter d'entrée (115), ce dernier comportant une communication (145) permettant à de l'huile qui y est contenue de retourner au premier compartiment (138).

36. Machine agricole de récolte de végétaux selon la revendication 5 et l'une quelconque des revendications 17 à 35, ***caractérisée en ce* que** l'accouplement élastique (45, 45') accouplant l'arbre de transmission (42, 42') d'un deuxième organe conditionneur (22, 22') au deuxième arbre de sortie unique (76) comporte un flasque (77, 78) lié audit deuxième arbre de sortie unique (76), le flasque (77) de l'accouplement (45) de l'un (22) de ces deuxièmes organes conditionneurs (22, 22') étant fixé sur l'extrémité correspondante dudit deuxième arbre de sortie unique (76), tandis que le flasque (78) de l'accouplement (45') de l'autre deuxième organe conditionneur (22') est monté coulissant sur l'extrémité correspondante dudit deuxième arbre de sortie unique (76).

37. Machine agricole de récolte de végétaux selon l'une quelconque des revendications 1 à 36, ***caractérisée en ce* que** le mécanisme de récolte (5) comporte en sus une structure porteuse (16) et que le boîtier de transmission (24) est lié à ladite structure porteuse (16) au moyen de trois articulations élastiques (27).

38. Machine agricole de récolte de végétaux selon l'une quelconque des revendications 1 à 37, ***caractérisée en ce* que** le mécanisme de récolte (5) comporte en sus une structure porteuse (16) et que l'extrémité extérieure (30, 30') de chaque premier organe conditionneur (21, 21') est supportée par ladite structure porteuse (16) au moyen d'un palier élastique (31, 31').

39. Machine agricole de récolte de végétaux selon l'une quelconque des revendications 1 à 38, ***caractérisée en ce* que** l'articulation (8) liant le timon (4) au châssis (3) s'étend sensiblement dans le plan vertical médian (9) de la machine dirigé suivant la direction d'avance (2) au travail.

40. Machine agricole de récolte de végétaux selon l'une quelconque des revendications 1 à 39, ***caractérisée en ce* que** chaque deuxième organe conditionneur (22, 22') s'étend sensiblement au-dessus du premier organe conditionneur (21, 21') correspondant.

## Patentansprüche

1. Landwirtschaftliche Maschine zum Ernten von Pflanzengut, die
- einen beweglichen Rahmen (3),
- eine Deichsel (4) zur Verbindung der landwirtschaftlichen Maschine zum Ernten von Pflanzengut mit einer Zugmaschine, wobei die Deichsel selbst mittels eines Gelenks (8) so mit dem Rahmen (3) verbunden ist, daß sie um eine nach oben ausgerichtete Schwenkachse (8a) schwenken kann,
- einen mit dem beweglichen Rahmen (3) verbundenen Erntemechanismus (5), der aus
* einem Schneidmechanismus (17) mit Schneidelementen (19) zum Schneiden von Pflanzengut und
* einer Aufbereitungsvorrichtung (18) mit zwei Aufbereitungseinheiten (20, 20'), die sich im wesentlichen in ihrer gegenseitigen Verlängerung erstrecken und jeweils mit zwei gegenläufigen Aufbereitungselementen (21, 21'; 22, 22') versehen sind, die sich voneinander entfernen können und zwischen denen das von den Schneidelementen (19) geschnittene Pflanzengut im Hinblick auf seine Behandlung hindurchgeführt werden kann,
besteht,
- Kraftübertragungselemente (6) unter anderem zur Gewährleistung des Antriebs der Aufbereitungseinheiten (20, 20') und mit einem sich zwischen den beiden Aufbereitungseinheiten (20, 20') erstreckenden Getriebekasten (24), der für jede von ihnen folgendes enthält:
* eine erste Ausgangswelle (25, 25'), die mittels einer Kupplung (29, 29') mit dem inneren Ende (28, 28') des ersten Aufbereitungselements (21, 21') nahe dem Getriebekasten (24) verbunden ist, und
* eine zweite Ausgangswelle (26, 26'), die mittels einer Kraftübertragungsvorrichtung (39, 39') mit dem zweiten Aufbereitungselement (22, 22') verbunden ist,
umfaßt,
***dadurch gekennzeichnet,* daß**
- das innere Ende (28, 28') jedes ersten Aufbereitungselements (21, 21') durch die entsprechende erste Ausgangswelle (25, 25') gestützt wird und
- die Kraftübertragungsvorrichtung (39, 39') jedes zweiten Aufbereitungselements (22, 22') das äußere Ende (38, 38') dieses letzteren mit der entsprechenden zweiten Ausgangswelle (26, 26') verbindet.

2. Landwirtschaftliche Maschine zum Ernten von Pflanzengut nach Anspruch 1, ***dadurch gekennzeichnet,* daß** die das innere Ende (28, 28') des ersten Aufbereitungselements (21, 21') einer Aufbereitungseinheit (20, 20') mit der entsprechenden ersten Ausgangswelle (25, 25') des Getriebekastens (24) verbindende Kupplung (29, 29') eine elastische Kupplung (29, 29') ist.

3. Landwirtschaftliche Maschine zum Ernten von Pflanzengut nach Anspruch 1 oder 2, ***dadurch gekennzeichnet,* daß** die Kraftübertragungsvorrichtung (39, 39') jedes zweiten Aufbereitungselements (22, 22') einer Aufbereitungseinheit (20, 20') einen schwenkbaren seitlichen Kasten (40, 40') enthält, der sich am äußeren Ende (38, 38') des zweiten Aufbereitungselements (22, 22') befindet.

4. Landwirtschaftliche Maschine zum Ernten von Pflanzengut nach Anspruch *3,* ***dadurch gekennzeichnet,* daß** die Kraftübertragungsvorrichtung (39, 39') jedes zweiten Aufbereitungselements (22, 22') einer Aufbereitungseinheit (20, 20') des weiteren eine Kraftübertragungswelle (42, 42') enthält, die die entsprechende zweite Ausgangswelle (26, 26') mit dem schwenkbaren seitlichen Kasten (40, 40') verbindet.

5. Landwirtschaftliche Maschine zum Ernten von Pflanzengut nach Anspruch 4, ***dadurch gekennzeichnet,* daß** die Kraftübertragungswelle (42, 42') mittels einer elastischen Kupplung (45, 45') mit der zweiten Ausgangswelle (26, 26') verbunden ist.

6. Landwirtschaftliche Maschine zum Ernten von Pflanzengut nach Anspruch 4 oder 5, ***dadurch gekennzeichnet,* daß** der schwenkbare seitliche Kasten (40, 40') einen Endlostrieb (48, 48') enthält, dessen Antriebsrad (49, 49') mit der Kraftübertragungswelle (42, 42') und dessen Abtriebsrad (50, 50') mit dem zweiten Aufbereitungselement (22, 22') verbunden ist.

7. Landwirtschaftliche Maschine zum Ernten von Pflanzengut nach Anspruch 6, ***dadurch gekennzeichnet,* daß** der Endlostrieb (48, 48') des schwenkbaren seitlichen Kastens (40, 40') ein Kettentrieb ist.

8. Landwirtschaftliche Maschine zum Ernten von Pflanzengut nach irgend einem der Ansprüche 4 bis 7, ***dadurch gekennzeichnet,* daß** die Längsachse (42a, 42a') der Kraftübertragungswelle (42, 42') im wesentlichen mit der Längsachse (26a, 26a') der entsprechenden zweiten Ausgangswelle (26, 26') zusammenfällt.

9. Landwirtschaftliche Maschine zum Ernten von Pflanzengut nach Anspruch 8, ***dadurch gekennzeichnet,* daß** der schwenkbare seitliche Kasten (40, 40') im wesentlichen um die Längsachse (26a, 26a') der entsprechenden zweiten Ausgangswelle (26, 26') schwenken kann.

10. Landwirtschaftliche Maschine zum Ernten von Pflanzengut nach irgend einem der Ansprüche 3 bis 9, ***dadurch gekennzeichnet,* daß** der schwenkbare seitliche Kasten (40, 40') ein im wesentlichen dichter Kasten, der ein Schmiermittel enthält, ist.

11. Landwirtschaftliche Maschine zum Ernten von Pflanzengut nach irgend einem der Ansprüche 1 bis 10, ***dadurch gekennzeichnet,* daß** das zweite Aufbereitungselement (22, 22') einer Aufbereitungseinheit (20, 20') an seinem inneren Ende (36, 36') mit einem Schwenkarm (37, 37') verbunden ist, der um eine sich in der Nähe der Längsachse (26a, 26a') der entsprechenden zweiten Ausgangswelle (26, 26') erstreckende und im wesentlichen parallel zur Längsachse (26a, 26a') verlaufende Schwenkachse (37a, 37a') schwenken kann.

12. Landwirtschaftliche Maschine zum Ernten von Pflanzengut nach Anspruch 11, ***dadurch gekennzeichnet,* daß** das die Schwenkachse (37a, 37a') des Schwenkarms (37, 37') definierende Gelenk (58, 58') ein elastisches Gelenk ist.

13. Landwirtschaftliche Maschine zum Ernten von Pflanzengut nach Anspruch 11 oder 12 und irgend einem der Ansprüche 3 bis 10, ***dadurch gekennzeichnet,* daß** das durch den schwenkbaren seitlichen Kasten (40, 40') und den Schwenkarm (37, 37') gestattete Schwenken des zweiten Aufbereitungselements (22, 22') einer Aufbereitungseinheit (20, 20') gegen die Wirkung eines verformbaren elastischen Elements (60, 60') erfolgt, dessen Rückholwirkungsstärke durch ein Einstellelement (65, 65') eingestellt werden kann.

14. Landwirtschaftliche Maschine zum Ernten von Pflanzengut nach Anspruch 13, ***dadurch gekennzeichnet,* daß** das verformbare elastische Element (60, 60') aus zwei koaxialen Drehstabfedern (61, 61'; 62, 62') besteht, die sich in ihrer gegenseitigen Verlängerung erstrecken und deren gemeinsame Längsachse (61a, 61a'; 62a, 62a') mit der Schwenkachse (37a, 37a') des Schwenkarms (37, 37') zusammenfällt.

15. Landwirtschaftliche Maschine zum Ernten von Pflanzengut nach Anspruch 14, ***dadurch gekennzeichnet,* daß** ein einziges Einstellelement (65, 65') pro Aufbereitungseinheit (20, 20') vorgesehen ist, das auf die benachbarten Enden (63, 63'; 64, 64') der beiden entsprechenden Drehstabfedem (61, 61'; 62, 62') einwirkt.

16. Landwirtschaftliche Maschine zum Ernten von Pflanzengut nach irgend einem der Ansprüche 1 bis 15, ***dadurch gekennzeichnet,* daß** der Getriebekasten (24)
- eine einzige erste Ausgangswelle (75), von der jedes Ende die erste Ausgangswelle (25, 25') der entsprechenden Aufbereitungseinheit (20, 20') bildet, und
- eine einzige zweite Ausgangswelle (76), von der jedes Ende die zweite Ausgangswelle (26, 26') der entsprechenden Aufbereitungseinheit (20, 20') bildet,
umfaßt.

17. Landwirtschaftliche Maschine zum Ernten von Pflanzengut nach Anspruch 16, ***dadurch gekennzeichnet,* daß** der Getriebekasten (24) eine Antriebswelle (80) enthält, die mittels eines ersten Paars Kegelzahnräder (81-82) und eines Endlostriebs (83) mit der einzigen ersten Ausgangswelle (75) und mittels eines zweiten Paars Kegelzahnräder (81-99) mit der einzigen zweiten Ausgangswelle (76) verbunden ist.

18. Landwirtschaftliche Maschine zum Ernten von Pflanzengut nach Anspruch 17, ***dadurch gekennzeichnet,* daß** das erste Paar Kegelzahnräder (81-82) und das zweite Paar Kegelzahnräder (81-99) ein gemeinsames Antriebskegelzahnrad (81) haben, das von der Antriebswelle (80) getragen wird.

19. Landwirtschaftliche Maschine zum Ernten von Pflanzengut nach Anspruch 17 oder 18, ***dadurch gekennzeichnet,* daß** das Antriebsrad (87) des Endlostriebs (83) des Getriebekastens (24) mit dem Abtriebskegelzahnrad (82) des ersten Paars Kegelzahnräder (81-82) verbunden ist, während das Abtriebsrad (88) des Endlostriebs (83) mit der einzigen ersten Ausgangswelle (75) verbunden ist.

20. Landwirtschaftliche Maschine zum Ernten von Pflanzengut nach Anspruch 19, ***dadurch gekennzeichnet,* daß** der Endlostrieb (83) des Getriebekastens (24) ein Kettentrieb ist.

21. Landwirtschaftliche Maschine zum Ernten von Pflanzengut nach Anspruch 19 oder 20, ***dadurch gekennzeichnet,* daß** das Antriebsrad (87) des Endlostriebs (83) des Getriebekastens (24) und das Abtriebskegelzahnrad des ersten Paars Kegelzahnräder (82) eine Anordnung (82-87) bilden, die zur einzigen zweiten Ausgangswelle (76) koaxial, aber nicht drehfest mir ihr verbunden ist.

22. Landwirtschaftliche Maschine zum Ernten von Pflanzengut nach irgend einem der Ansprüche 17 bis 21, ***dadurch gekennzeichnet,* daß** der Getriebekasten (24) eine dritte Ausgangswelle (104) enthält, die den Schneidmechanismus (17) antreiben soll.

23. Landwirtschaftliche Maschine zum Ernten von Pflanzengut nach Anspruch 22, ***dadurch gekennzeichnet,* daß** die Antriebswelle (80) mittels eines dritten Paars Kegelzahnräder (81-110) mit der dritten Ausgangswelle (104) verbunden ist.

24. Landwirtschaftliche Maschine zum Ernten von Pflanzengut nach Anspruch 23, ***dadurch gekennzeichnet,* daß** das erste Paar Kegelzahnräder (81-82), das zweite Paar Kegelzahnräder (81-99) und das dritte Paar Kegelzahnräder (81-110) ein gemeinsames Antriebskegelzahnrad (81) aufweisen, das von der Antriebswelle (80) getragen wird.

25. Landwirtschaftliche Maschine zum Ernten von Pflanzengut nach Anspruch 22, 23 oder 24, ***dadurch gekennzeichnet,* daß** ein Winkelgetriebegehäuse (102), das die Bewegung der dritten Ausgangswelle (104) aufnimmt und von oben mindestens eines der Schneidelemente (19) des Schneidmechanismus (17) antreibt, vorgesehen ist.

26. Landwirtschaftliche Maschine zum Ernten von Pflanzengut nach Anspruch 25, ***dadurch gekennzeichnet,* daß** das (die) Schneidelement(e) (19), das (die) durch das Winkelgetriebegehäuse (102) angetrieben wird (werden), im wesentlichen in der mittleren Vertikalebene (9) der in Betriebsfahrtrichtung (2) ausgerichteten Maschine angeordnet sind.

27. Landwirtschaftliche Maschine zum Ernten von Pflanzengut nach irgend einem der Ansprüche 17 bis 26, ***dadurch gekennzeichnet,* daß** der Getriebekasten (24) darüber hinaus ein Eingangsgetriebegehäuse (115) mit einer Eingangswelle (117), die mittels eines Paars Eingangskegelzahnräder (118-119) mit der Antriebswelle (80) verbunden ist, enthält.

28. Landwirtschaftliche Maschine zum Ernten von Pflanzengut nach Anspruch 27, ***dadurch gekennzeichnet,* daß** die Längsachse (80a) der Antriebswelle (80) nach oben ausgerichtet ist.

29. Landwirtschaftliche Maschine zum Ernten von Pflanzengut nach Anspruch 28, ***dadurch gekennzeichnet,* daß** das Eingangsgetriebegehäuse (115) durch Schwenken um die Längsachse (80a) der Antriebswelle (80) mehrere Stellungen einnehmen kann.

30. Landwirtschaftliche Maschine zum Ernten von Pflanzengut nach Anspruch 29, ***dadurch gekennzeichnet,* daß** die verschiedenen Winkelstellungen, die das Eingangsgetriebegehäuse (115) einnehmen kann, verschiedenen Stellungen entsprechen, die die Deichsel (4) durch Schwenken um die durch das die Deichsel (4) mit dem Rahmen (3) verbindende Gelenk (8) definierte Schwenkachse (8a) einnehmen kann.

31. Landwirtschaftliche Maschine zum Ernten von Pflanzengut nach Anspruch 28, 29 oder 30, ***dadurch gekennzeichnet,* daß** die Längsachse (80a) der Antriebswelle (80) im wesentlichen parallel zur durch das die Deichsel (4) mit dem Rahmen (3) verbindende Gelenk (8) definierten Schwenkachse (8a) verläuft.

32. Landwirtschaftliche Maschine zum Ernten von Pflanzengut nach irgend einem der Ansprüche 27 bis 31, ***dadurch gekennzeichnet,* daß** die Eingangswelle (117) des Eingangsgetriebegehäuses (115) mit einer Linie von Wellen (136) verbunden ist, die zumindest teilweise von der Deichsel (4) getragen wird.

33. Landwirtschaftliche Maschine zum Ernten von Pflanzengut nach irgend einem der Ansprüche 17 bis 32, ***dadurch gekennzeichnet,* daß** der Getriebekasten (24)
- ein erstes Fach (138), das das erste Paar Kegelzahnräder (81-82), das zweite Paar Kegelzahnräder (81-99) und gegebenenfalls das dritte Paar Kegelzahnräder (81-110) enthält, und
- ein zweites Fach (139), das den Endlostrieb (83) enthält, umfaßt.

34. Landwirtschaftliche Maschine zum Ernten von Pflanzengut nach Anspruch 33, ***dadurch gekennzeichnet,* daß**
- das zweite Fach (139) eine Rinne (140) zur Rückgewinnung des im zweiten Fach (139) enthaltenen, durch den Endlostrieb (83) herausgeschleuderten Öls enthält, um es in das erste Fach (138) umzufüllen, und
- das erste Fach (138) eine Verbindung (146) mit dem zweiten Fach (139) aufweist, die eine Rückführung des im ersten Fach (138) enthaltenen Öls zum zweiten Fach (139) gestattet.

35. Landwirtschaftliche Maschine zum Ernten von Pflanzengut nach Anspruch 27 und Anspruch 33 oder 34, ***dadurch gekennzeichnet,* daß** der Getriebekasten (24) des weiteren eine Pumpe (141) enthält, die das im ersten Fach (138) enthaltene Öl in das Eingangsgetriebegehäuse (115) pumpt, wobei letzteres eine Verbindung (145) enthält, die eine Rückführung des darin enthaltenen Öls zum ersten Fach (138) gestattet.

36. Landwirtschaftliche Maschine zum Ernten von Pflanzengut nach Anspruch 5 und irgend einem der Ansprüche 17 bis 35, ***dadurch gekennzeichnet,* daß** die die Kraftübertragungswelle (42, 42') eines zweiten Aufbereitungselements (22, 22') mit der einzigen zweiten Ausgangswelle (76) verbindende elastische Kupplung (45, 45') einen mit der einzigen zweiten Ausgangswelle (76) verbundenen Flansch (77, 78) enthält, wobei der Flansch (77) der Kupplung (45) eines (22) dieser zweiten Aufbereitungselemente (22, 22') an dem entsprechenden Ende der einzigen zweiten Ausgangswelle (76) befestigt ist, während der Flansch (78) der Kupplung (45') des anderen zweiten Aufbereitungselements (22') am entsprechenden Ende der einzigen zweiten Ausgangswelle (76) gleitend angebracht ist.

37. Landwirtschaftliche Maschine zum Ernten von Pflanzengut nach irgend einem der Ansprüche 1 bis 36, ***dadurch gekennzeichnet,* daß** der Erntemechanismus (5) des weiteren ein Traggestell (16) enthält und daß der Getriebekasten (24) mittels dreier elastischer Gelenke (27) mit dem Traggestell (16) verbunden ist.

38. Landwirtschaftliche Maschine zum Ernten von Pflanzengut nach irgend einem der Ansprüche 1 bis 37, ***dadurch gekennzeichnet,* daß** der Erntemechanismus (5) des weiteren ein Traggestell (16) enthält und daß das äußere Ende (30, 30') jedes ersten Aufbereitungselements (21, 21') mittels eines elastischen Lagers (31, 31') durch das Traggestell (16) gestützt wird.

39. Landwirtschaftliche Maschine zum Ernten von Pflanzengut nach irgend einem der Ansprüche 1 bis 38, ***dadurch gekennzeichnet,* daß** sich das die Deichsel (4) mit dem Rahmen (3) verbindende Gelenk (8) im wesentlichen in der mittleren Vertikalebene (9) der in Betriebsfahrtrichtung (2) ausgerichteten Maschine erstreckt.

40. Landwirtschaftliche Maschine zum Ernten von Pflanzengut nach irgend einem der Ansprüche 1 bis 39, ***dadurch gekennzeichnet,* daß** sich jedes zweite Aufbereitungselement (22, 22') im wesentlichen über dem entsprechenden ersten Aufbereitungselement (21, 21') erstreckt.

## Claims

1. Agricultural machine for harvesting plant matter, comprising:
- a moving chassis (3),
- a drawbar (4) intended to connect the said agricultural machine for harvesting plant matter to a tractor vehicle, and itself connected to the chassis (3) by means of an articulation (8) so that it is able to pivot about an upward- directed axis (8a) of pivoting,
- a harvesting mechanism (5) connected to the moving chassis (3) and comprising:
* a cutting mechanism (17) comprising cutting elements (19) intended to cut plant matter, and
* a conditioning device (18) comprising two conditioning units (20, 20') extending substantially in the continuation of one another and each equipped with two contra-rotating conditioning elements (21, 21'; 22, 22') capable of moving apart and between which the plant matter cut by the cutting elements (19) is intended to pass in order to be treated,
- transmission elements (6) intended, among other things, to drive the conditioning units (20, 20') and comprising a transmission gearbox (24) extending between the two conditioning units (20, 20') and comprising in the case of each one:
* a first output shaft (25, 25') connected, by means of a coupling (29, 29'), to the inner end (28, 28') of the first conditioning element (21, 21') close to the transmission gearbox (24), and
* a second output shaft (26, 26') coupled, by means of a transmission device (39, 39'), to the second conditioning element (22, 22'),
***characterized in* that**:
- the inner end (28, 28') of each first conditioning element (21, 21') is supported by the corresponding first output shaft (25, 25'), and
- the transmission device (39, 39') of each second conditioning element (22, 22') couples the outer end (38, 38') of the latter to the corresponding second output shaft (26, 26').

2. Agricultural machine for harvesting plant matter according to Claim 1, ***characterized in* that** the coupling (29, 29') connecting the inner end (28, 28') of the first conditioning element (21, 21') of a conditioning unit (20, 20') to the corresponding first output shaft (25, 25') of the transmission gearbox (24) is an elastic coupling (29, 29').

3. Agricultural machine for harvesting plant matter according to Claim 1 or 2, ***characterized in* that** the transmission device (39, 39') of each second conditioning element (22, 22') of a conditioning unit (20, 20') comprises a pivoting lateral box (40, 40') located at the outer end (38, 38') of the said second conditioning element (22, 22').

4. Agricultural machine for harvesting plant matter according to Claim 3, ***characterized in* that** the said transmission device (39, 39') of each second conditioning element (22, 22') of a conditioning unit (20, 20') additionally comprises a transmission shaft (42, 42') coupling the corresponding second output shaft (26, 26') to the pivoting lateral box (40, 40').

5. Agricultural machine for harvesting plant matter according to Claim 4, ***characterized in* that** the said transmission shaft (42, 42') is coupled to the corresponding second output shaft (26, 26') by means of an elastic coupling (45, 45').

6. Agricultural machine for harvesting plant matter according to Claim 4 or 5, ***characterized in* that** the pivoting lateral box (40, 40') comprises an endless transmission (48, 48'), the driving wheel (49, 49') of which is coupled to the transmission shaft (42, 42') and the receiving wheel (50, 50') of which is coupled to the second conditioning element (22, 22').

7. Agricultural machine for harvesting plant matter according to Claim 6, ***characterized in* that** the endless transmission (48, 48') of the pivoting lateral box (40, 40') is a chain drive.

8. Agricultural machine for harvesting plant matter according to any one of Claims 4 to 7, ***characterized in* that** the longitudinal axis (42a, 42a') of the said transmission shaft (42, 42') is substantially coincident with the longitudinal axis (26a, 26a') of the corresponding second output shaft (26, 26').

9. Agricultural machine for harvesting plant matter according to Claim 8, ***characterized in* that** the pivoting lateral box (40, 40') can pivot substantially about the longitudinal axis (26a, 26a') of the corresponding second output shaft (26, 26').

10. Agricultural machine for harvesting plant matter according to any one of Claims 3 to 9, ***characterized in* that** the pivoting lateral box (40, 40') is a substantially sealed box containing a lubricant.

11. Agricultural machine for harvesting plant matter according to any one of Claims 1 to 10, ***characterized in* that** the second conditioning element (22, 22') of a conditioning unit (20, 20') is connected, at its inner end (36, 36'), to a pivoting arm (37, 37') capable of pivoting about an axis (37a, 37a') of pivoting extending near the longitudinal axis (26a, 26a') of the corresponding second output shaft (26, 26') and substantially parallel to the said longitudinal axis (26a, 26a').

12. Agricultural machine for harvesting plant matter according to Claim 11, ***characterized in* that** the articulation (58, 58') defining the axis (37a, 37a') of pivoting of the pivoting arm (37, 37') is an elastic articulation.

13. Agricultural machine for harvesting plant matter according to Claim 11 or 12 and any one of Claims 3 to 10, ***characterized in* that** the pivoting of the second conditioning element (22, 22') of a conditioning unit (20, 20') allowed by the pivoting lateral box (40, 40') and the pivoting arm (37, 37') is against the action of an elastically deformable element (60, 60'), the intensity of the return action of which can be altered using an adjusting element (65, 65').

14. Agricultural machine for harvesting plant matter according to Claim 13, ***characterized in* that** the elastically deformable element (60, 60') consists of two coaxial torsion bars (61, 61'; 62, 62') extending in the continuation of one another and the common longitudinal axis (61a, 61a'; 62a, 62a') of which is coincident with the axis (37a, 37a') of pivoting of the pivoting arm (37, 37').

15. Agricultural machine for harvesting plant matter according to Claim 14, ***characterized in* that** there is just one adjusting element (65, 65') per conditioning unit (20, 20'), which acts on the adjacent ends (63, 63'; 64, 64') of the corresponding two torsion bars (61, 61'; 62, 62').

16. Agricultural machine for harvesting plant matter according to any one of Claims 1 to 15, ***characterized in* that** the transmission gearbox (24) comprises:
- a first single output shaft (75), each end of which forms the first output shaft (25, 25') of the corresponding conditioning unit (20, 20'), and
- a second single output shaft (76), each end of which forms the second output shaft (26, 26') of the corresponding conditioning unit (20, 20').

17. Agricultural machine for harvesting plant matter according to Claim 16, ***characterized in* that** the transmission gearbox (24) comprises a drive shaft (80) coupled to the first single output shaft (75) by means of a first pair of bevel gear wheels (81-82) and of an endless transmission (83), and to the second single output shaft (76) by means of a second pair of bevel gear wheels (81-99).

18. Agricultural machine for harvesting plant matter according to Claim 17, ***characterized in* that** the first pair of bevel gear wheels (81-82) and the second pair of bevel gear wheels (81-99) have their driving bevel gear wheel (81) in common, which wheel is carried by the drive shaft (80).

19. Agricultural machine for harvesting plant matter according to Claim 17 or 18, ***characterized in* that** the driving wheel (87) of the endless transmission (83) of the transmission gearbox (24) is coupled to the receiving bevel gear wheel (82) of the first pair of bevel gear wheels (81-82), while the receiving wheel (88) of the said endless transmission (83) is coupled to the first single output shaft (75).

20. Agricultural machine for harvesting plant matter according to Claim 19, ***characterized in* that** the endless transmission (83) of the transmission gearbox (24) is a chain drive.

21. Agricultural machine for harvesting plant matter according to Claim 19 or 20, ***characterized in* that** the driving wheel (87) of the endless transmission (83) of the transmission gearbox (24) and the receiving bevel gear wheel of the first pair of bevel gear wheels (82) form an assembly (82-87) coaxial with the second single output shaft (76) but not connected in such a way as to rotate with the latter.

22. Agricultural machine for harvesting plant matter according to any one of Claims 17 to 21, ***characterized in* that** the transmission gearbox (24) comprises a third output shaft (104) intended to drive the cutting mechanism (17).

23. Agricultural machine for harvesting plant matter according to Claim 22, ***characterized in* that** the drive shaft (80) is coupled to the third output shaft (104) by means of a third pair of bevel gear wheels (81-110).

24. Agricultural machine for harvesting plant matter according to Claim 23, ***characterized in* that** the first pair of bevel gear wheels (81-82), the second pair of bevel gear wheels (81-99) and the third pair of bevel gear wheels (81-110) have their driving bevel gear wheel (81) in common, which wheel is carried by the drive shaft (80).

25. Agricultural machine for harvesting plant matter according to Claim 22, 23 or 24, ***characterized in* that** there is an angle gearbox (102) which receives the movement of the third output shaft (104) and, from above, drives at least one of the cutting elements (19) of the cutting mechanism (17).

26. Agricultural machine for harvesting plant matter according to Claim 25, ***characterized in* that** the cutting element(s) (19) driven by the angle gearbox (102) is (are) located substantially in the vertical mid-plane (9) of the machine, directed in the direction of forward travel (2) during work.

27. Agricultural machine for harvesting plant matter according to any one of Claims 17 to 26, ***characterized in* that** the transmission gearbox (24) additionally comprises an input box (115) with an input shaft (117) coupled to the drive shaft (80) by means of a pair of input bevel gear wheels (118-119).

28. Agricultural machine for harvesting plant matter according to Claim 27, ***characterized in* that** the longitudinal axis (80a) of the drive shaft (80) is directed upwards.

29. Agricultural machine for harvesting plant matter according to Claim 28, ***characterized in* that** the input box (115) can occupy several positions by pivoting about the longitudinal axis (80a) of the drive shaft (80).

30. Agricultural machine for harvesting plant matter according to Claim 29, ***characterized in* that** the various angular positions that the input box (115) can occupy correspond to various positions that the drawbar (4) can occupy by pivoting about the axis (8a) of pivoting defined by the articulation (8) connecting the drawbar (4) to the chassis (3).

31. Agricultural machine for harvesting plant matter according to Claim 28, 29 or 30, ***characterized in* that** the longitudinal axis (80a) of the drive shaft (80) is substantially parallel to the axis (8a) of pivoting defined by the articulation (8) connecting the drawbar (4) to the chassis (3).

32. Agricultural machine for harvesting plant matter according to any one of Claims 27 to 31, ***characterized in* that** the input shaft (117) of the input box (115) is coupled to a line of shafts (136) which is at least partially carried by the drawbar (4).

33. Agricultural machine for harvesting plant matter according to any one of Claims 17 to 32, ***characterized in* that** the transmission gearbox (24) comprises:
- a first compartment (138) containing the first pair of bevel gear wheels (81-82), the second pair of bevel gear wheels (81-99) and, as appropriate, the third pair of bevel gear wheels (81-110), and
- a second compartment (139) containing the endless transmission (83).

34. Agricultural machine for harvesting plant matter according to Claim 33,
***characterized in* that**:
- the second compartment (139) comprises a channel (140) collecting oil contained in the second compartment (139) and splashed by the endless transmission (83), to transfer it into the first compartment (138), and
- the first compartment (138) has a communication (146) with the second compartment (139) allowing oil contained in the first compartment (138) to return to the second compartment (139).

35. Agricultural machine for harvesting plant matter according to Claim 27 and Claim 33 or 34, ***characterized in* that** the transmission gearbox (24) additionally comprises a pump (141) pumping oil contained in the first compartment (138) into the input box (115), the latter having a communication (145) allowing oil contained therein to return to the first compartment (138).

36. Agricultural machine for harvesting plant matter according to Claim 5 and any one of Claims 17 to 35, ***characterized in* that** the elastic coupling (45, 45') coupling the transmission shaft (42, 42') of a second conditioning element (22, 22') to the second single output shaft (76) comprises a flange (77, 78) connected to the said second single output shaft (76), the flange (77) of the coupling (45) of one (22) of these second conditioning elements (22, 22') being fixed to the corresponding end of the said second single output shaft (76), while the flange (78) of the coupling (45') of the other second conditioning element (22') is slidably mounted on the corresponding end of the said second single output shaft (76).

37. Agricultural machine for harvesting plant matter according to any one of Claims 1 to 36, ***characterized in* that** the harvesting mechanism (5) additionally comprises a carrying structure (16) and that the transmission gearbox (24) is connected to the said carrying structure (16) by means of three elastic articulations (27).

38. Agricultural machine for harvesting plant matter according to any one of Claims 1 to 37, ***characterized in* that** the harvesting mechanism (5) additionally comprises a carrying structure (16) and that the outer end (30, 30') of each first conditioning element (21, 21') is supported by the said carrying structure (16) by means of an elastic bearing (31, 31').

39. Agricultural machine for harvesting plant matter according to any one of Claims 1 to 38, ***characterized in* that** the articulation (8) connecting the drawbar (4) to the chassis (3) extends substantially in the vertical mid-plane (9) of the machine directed in the direction of forward travel (2) during work.

40. Agricultural machine for harvesting plant matter according to any one of Claims 1 to 39, ***characterized in* that** each second conditioning element (22, 22') extends substantially above the corresponding first conditioning element (21, 21').
